(19) Europäisches Patentamt
European Patent Office
Office européen des brevets

(11) **EP 1 966 248 B1**

(12) **EUROPÄISCHE PATENTSCHRIFT**

(45) Veröffentlichungstag und Bekanntmachung des Hinweises auf die Patenterteilung:
**10.07.2019 Patentblatt 2019/28**

(21) Anmeldenummer: **06830495.5**

(22) Anmeldetag: **11.12.2006**

(51) Int Cl.:
**C08F 2/18** (2006.01)   **C08F 2/44** (2006.01)
**C08K 5/00** (2006.01)   **C08L 33/08** (2006.01)
**C08F 220/14** (2006.01)   **C09K 11/06** (2006.01)
**C08F 2/22** (2006.01)   **C09D 133/02** (2006.01)
*C08F 220/40* (2006.01)   *C08F 212/08* (2006.01)
*C08F 220/06* (2006.01)   *C08F 222/10* (2006.01)

(86) Internationale Anmeldenummer:
**PCT/EP2006/069520**

(87) Internationale Veröffentlichungsnummer:
**WO 2007/074041 (05.07.2007 Gazette 2007/27)**

(54) **WÄSSRIGE DISPERSIONEN VON POLYMEREN, DIE EINEN FLUORESZENZFARBSTOFF ENTHALTEN, VERFAHREN ZU IHRER HERSTELLUNG UND IHRE VERWENDUNG ZUM MARKIEREN VON MATERIALIEN**

AQUEOUS DISPERSIONS OF POLYMERS WHICH COMPRISE A FLUORESCENT DYE, PROCESS FOR THEIR PRODUCTION AND THEIR USE FOR MARKING MATERIALS

DIPERSIONS AQUEUSES DE POLYMERES CONTENANT DES COLORANTS FLUORESCENTS, LEUR PROCEDE DE FABRICATION ET LEUR UTILISATION POUR LE MARQUAGE DE MATERIAUX

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **22.12.2005 DE 102005062027**
**10.02.2006 EP 06101550**

(43) Veröffentlichungstag der Anmeldung:
**10.09.2008 Patentblatt 2008/37**

(73) Patentinhaber: **BASF SE**
**67056 Ludwigshafen am Rhein (DE)**

(72) Erfinder:
• **BEHRENS, Sven Holger**
**68159 Mannheim (DE)**
• **CHAMP, Simon**
**67063 Ludwigshafen (DE)**
• **GEISSLER, Ulrike**
**68167 Mannheim (DE)**
• **HENTZE, Hans-Peter**
**68161 Mannheim (DE)**
• **JUNG, Marc Rudolf**
**67547 Worms (DE)**
• **KAUB, Hans-Peter**
**67122 Altrip (DE)**
• **NORD, Simon**
**67354 Römerberg (DE)**

(74) Vertreter: **BASF IP Association**
**BASF SE**
**G-FLP-C006**
**67056 Ludwigshafen (DE)**

(56) Entgegenhaltungen:
**EP-A1- 0 105 057      EP-A1- 0 692 517**
**EP-A2- 0 496 149      EP-A2- 0 590 935**
**EP-A2- 1 191 041      WO-A1-2005/105931**
**US-A- 4 016 133       US-A1- 5 607 864**
**US-A1- 2005 075 453   US-B1- 6 541 032**

Bemerkungen:
Die Akte enthält technische Angaben, die nach dem Eingang der Anmeldung eingereicht wurden und die nicht in dieser Patentschrift enthalten sind.

**Beschreibung**

Die Erfindung betrifft wässrige Dispersionen von Polymeren, die einen Teilchendurchmesser von mindestens 1 $\mu$m haben und die einen Fluoreszenzfarbstoff enthalten, Verfahren zur Herstellung solcher Dispersionen durch radikalische Suspensionspolymerisation von ethylenisch ungesättigten Monomeren in einer Öl-in-Wasser-Emulsion, deren disperse Phase mindestens einen Fluoreszenzfarbstoff in mindestens einem ethylenisch ungesättigten Monomer gelöst enthält und einen mittleren Teilchendurchmesser von mindestens 1 $\mu$m aufweist, in Gegenwart mindestens einer oberflächenaktiven Verbindung, und Verwendung der so erhältlichen wässrigen Dispersionen oder der daraus erhältlichen Polymerpulver zum Markieren von Materialien.

Aus der WO-A-99/40123 ist ein Verfahren zur Herstellung von wässrigen Polymerdispersionen bekannt, deren dispergierte Polymerteilchen einen organischen Farbstoff homogen, d.h. molekulardispers verteilt enthalten. Solche wässrigen Dispersionen werden durch Miniemulsionspolymerisation hergestellt, indem man ethylenisch ungesättigte Monomere, die einen organischen Farbstoff gelöst enthalten, in Form einer Öl-in-Wasser-Emulsion in Gegenwart von Radikale bildenden Polymerisationsinitiatoren polymerisiert, wobei die disperse Phase der Emulsion im Wesentlichen von farbstoffhaltigen Monomertröpfchen mit einem Durchmesser < 500 nm gebildet wird. In einer vorteilhaften Ausführungsform der Erfindung setzt man bei der Polymerisation Monomermischungen ein, die vernetzend wirkende Monomere enthalten. Die Polymerdispersionen sind sedimentationsstabil. Die dispergierten Teilchen haben einen mittleren Teilchendurchmesser von 100 bis 400 nm. Sie können mit Hilfe konventioneller Trocknungsmethoden aus den wässrigen Dispersionen gewonnen werden. Die farbstoffhaltigen Polymerdispersionen werden beispielsweise zur Pigmentierung von hochmolekularen organischen und anorganischen Materialien, zur Pigmentierung von Druckfarben und von Tinten für den Ink-Jet-Druck verwendet.

Weitere farbmittelhaltige Polymerdispersionen, deren farbmittelhaltige Polymerisatteilchen einen mittleren Teilchendurchmesser unterhalb von 1000 nm haben, sind aus der EP-A-1 191 041 bekannt. Als Farbmittel kommen neben organischen Farbstoffen auch UV-Absorber und optische Aufheller in Betracht. Sie werden durch Lösen eines Farbmittels in mindestens einem ethylenisch ungesättigten Monomer, Emulgieren dieser Lösung in Wasser unter Bildung einer konventionellen Makroemulsion, Homogenisieren der Makroemulsion unter Bildung einer Miniemulsion mit einer mittleren Tröpfchengröße von unterhalb 1000 nm und Polymerisieren der Miniemulsion in Gegenwart eines Radikale bildenden Polymerisationsinitiators, 0,1 bis 20 Gew.-% wenigstens einer nichtionischen oberflächenaktiven Verbindung und 1 bis 50 Gew.-%, jeweils bezogen auf die eingesetzten Monomeren, wenigstens eines amphiphilen Polymerisats hergestellt. Die Polymerteilchen enthalten 0,5 bis 50 Gew.-%, mindestens eines organischen Farbstoffs, optischen Aufhellers oder UV-Absorbers homogen verteilt, worunter verstanden werden soll, dass die organischen Farbmittel in der Polymermatrix monomolekular gelöst sind oder in Form von bi- oder höhermolekularen Aggregaten vorliegen.

Aus der WO-A-2004/037867 sind Alkyldiketene enthaltende wässrige Polymerdispersionen bekannt, die durch Miniemulsionspolymerisation von hydrophoben monoethylenisch ungesättigten Monomeren in Gegenwart von Alkyldiketenen erhältlich sind. Diese Dispersionen werden als Leimungsmittel für Papier, als Hydrophobierungsmittel für Leder, natürliche und/oder synthetische Fasern und Textilien verwendet.

B.J. Battersby, G.A. Lawrie, A.P.R. Johnston und M. Trau berichten in Chem. Commun., 2002, 1435 - 1441 über optische Kodierung von kolloidalen Suspensionen mit Fluoreszenzfarbstoffen, Nanokristallen und Metallen. So wurden beispielsweise Kolloide mit einem Durchmesser von 3 bis 6 $\mu$m durch Einlagerung von Fluoreszenzfarbstoffen oder von komplex gebundenen Lanthaniden optisch markiert. Eine andere Art der Markierung von Kolloiden besteht in der Einlagerung von Zinksulfid, das mit Cadmium-Selenid-Nanokristallen versehen ist, oder in der elektrochemischen Ablagerung von Metallionen in Hohlräumen von Kolloiden. Die Kolloide können beispielsweise mit Hilfe eines Fluoreszenzmikroskops oder eines Cytometers voneinander unterschieden werden.

Aus der WO-A-99/52708 ist ein Verfahren zum Markieren von gasförmigen, flüssigen oder festen Materialien bekannt, wobei man zu einem gasförmigen, flüssigen oder festen Material, das später identifiziert werden soll, eine ausreichende Menge an gefärbten Mikropartikeln und/oder Nanopartikeln zusetzt, die an Carrier-Mikropartikeln gebunden sind. Die verwendeten Teilchen bestehen beispielsweise aus vernetztem Polystyrol und haben einen Durchmesser von etwa 5,5 $\mu$m. Die Teilchen werden z.B. mit drei verschiedenen Fluoreszenzfarbstoffen in acht verschiedenen Konzentrationen der Farbstoffe angefärbt bzw. kodiert, so dass man 512 verschiedene Gruppen von kodierten Teilchen erhält. Die einzelnen Gruppen können beispielsweise mit Hilfe eines Cytometers identifiziert werden. Die kodierten Teilchen werden zum Markieren von Substanzen, z.B. Kochsalzkristallen, verwendet, um so beispielsweise den Hersteller, die Produktionscharge und das Herstelldatum zu verifizieren.

Aus der DE-A 2004 027 416 ist ein Verfahren zum Markieren von Materialien mit kodierten Mikropartikeln bekannt, wobei man kodierte Mikropartikeln einsetzt, die erhältlich sind durch

(i) Polymerisieren mindestens eines wasserlöslichen monoethylenisch ungesättigten Monomeren in Gegenwart mindestens eines ethylenisch ungesättigten Monomeren mit mindestens zwei Doppelbindungen im Molekül durch umgekehrte Wasser-in-Öl-Suspensions-Polymerisation in Gegenwart von dotierten Nanopartikeln als Suspensionsmittel,

(ii) Emulsionspolymerisation von wasserunlöslichen monoethylenisch ungesättigten Monomeren mit 0 bis 10 Gew.-%, bezogen auf die Monomermischung, mindestens eines ethylenisch ungesättigten Monomeren mit mindestens zwei Doppelbindungen im Molekül, wobei man als Emulgator zur Stabilisierung der dispersen Phase dotierte Nanopartikeln einsetzt,

(iii) Polymerisieren mindestens eines ethylenisch ungesättigten Monomeren zusammen mit einem copolymerisierbaren Farbstoff, der eine ethylenisch ungesättigte Doppelbindung aufweist, und gegebenenfalls Agglomerieren dieser Teilchen,

(iv) Adsorption mindestens eines Farbstoffs an ein in Wasser praktisch nicht lösliches Polymerteilchen und gegebenenfalls Agglomerieren dieser Teilchen,

(v) Agglomerieren von mindestens zwei unterschiedlichen Gruppen von Mikropartikeln, die sich durch ihre Absorption, Emission und/oder Streuung von elektromagnetischer Strahlung unterscheiden, zu Aggregaten mit einem mittleren Teilchendurchmesser von 300 nm bis 500 $\mu$m,

(vi) Präzipitieren mindestens eines wasserunlöslichen Farbstoffs aus einer Lösung in mindestens einem mit Wasser mischbaren organischen Lösemittel auf ein in Wasser praktisch nicht lösliches Polymerteilchen oder

(vii) Präzipitieren durch elektrostatische Anziehung von wasserlöslichen Farbstoffen auf entgegengesetzt geladene in Wasser praktisch unlösliche Polymerteilchen.

Bei der Polymerisation gemäß (i) und (ii) werden beispielsweise Nanopartikeln eingesetzt, die mindestens mit einem Farbstoff oder einer Verbindung aus der Gruppe der Seltenen Erden des Periodischen Systems dotiert oder die radioaktiv sind.

Aus der EP-B-0 692 517 ist ein Verfahren zur Herstellung von Fluoreszenzpigmenten bekannt, wobei man eine Mischung aus

(A) 69,9 bis 99,8 Gew.-% eines $C_1$-$C_8$-Alkylesters der Acryl- oder Methacrylsäure,

(B) 0 bis 29,9 Gew.-% eines copolymerisierbaren, monoethylenisch ungesättigten Monomeren,

(C) 0,1 bis 30,0 Gew.-% eines copolymerisierbaren, polyfunktionellen, vernetzend wirkenden Monomers in Gegenwart von

(D) 0,1 bis 15,0 Gew.-%, bezogen auf die Summe von (A) und (B), eines unpolaren Fluoreszenzfarbstoffes aus der Cumarin- oder Perylenreihe

in Suspension polymerisiert. Der Durchmesser der in Wasser dispergierten Polymerteilchen, die einen Fluoreszenzfarbstoff enthalten, liegt in dem Bereich von 0,1 bis 3 mm, wenn man die Monomeren mit Hilfe eines Impellerrührers in Wasser emulgiert, und bei 1 bis 100 $\mu$m, wenn man die Monomeren mit Hilfe von stark scherenden Aggregaten wie Ultra-Turrax® in Wasser emulgiert und die Emulsionen anschließend polymerisiert. Die so erhältlichen wässrigen Polymerdispersionen haben jedoch eine breite Teilchengrößenverteilung.

Die EP-A-0 496 149 beschreibt eine wässrige Emulsion eines Harzes, das einen fluoreszierenden Farbstoff enthält, umfassend 25 - 50 Gew.-% eines wasserunlöslichen Tetrapolymeren, 0,10 - 10 Gew.-% des fluoreszierenden Farbstoffs sowie 0,2 - 10 Gew.-% eines anionischen Emulgators. Das Tetrapolymer umfasst A) 52 - 65 Gew.-% eines wasserunlöslichen Vinylmonomeren frei von polaren Gruppen, B) 25 - 35 Gew.-% Vinylnitril, C) 1,5 - 4,5 Gew.-% eines Vinylmonomeren enthaltend Sulfonatgruppen und D) 5 - 15 Gew.-% eines oder mehrerer polarer Vinylmonomeren aus der Gruppe bestehend aus polaren Acrylatestern, Vinylacetat und einem substituierten Acrylamid enthaltend OH- oder Carboxylestergruppen. Die wässrige Emulsion eines Harzes wird mittels einer Emulsionspolymerisation hergestellt.

Aus der US-B-6 541 032 ist die Verwendung feinteiliger, farbstoffhaltiger Polymerisate in Form einer wässrigen Polymerdispersion oder eines daraus erhältlichen Polymerpulvers, dessen Polymermatrix wenigstens einen organischen Farbstoff homogen verteilt enthält, als farbgebenden Bestandteil in kosmetischen Mitteln bekannt. Deren Herstellung erfolgt durch radikalische wässrige Emulsionspolymerisation.

In der EP-A-0 105 057 wird ein Verfahren zur Herstellung von reaktiven hydrophilen, mit einem Farbstoff oder einer fluoreszierenden Verbindung markierten Latexpartikeln beschrieben. Dabei wird ein in Wasser schwerlösliches Monomer oder ein Gemisch von in Wasser schwerlöslichen Monomeren mit einem Farbstoff oder einer fluoreszierenden Verbindung dispergiert und unter Ausschluss von Sauerstoff durch Emulsionspolymerisation in Anwesenheit eines wasserlöslichen, Radikal bildenden Initiators, jedoch ohne Zusatz eines Emulgators oder Stabilisators, homo- oder copolymerisiert. Es werden Latexpartikel erhalten, die kugelförmig monodispers verteilt und untereinander annähernd gleich groß sind.

Die US-B-5 607 864 beschreibt Partikel aus fluoreszierendem Latex, umfassend Polymerteilchen mit mindestens einem darin eingekapselten hydrophoben Fluorochrom, wobei das hydrophobe Fluorochrom mindestens fünf konjugierte aromatische Ringglieder umfasst, wobei mindestens drei der aromatischen Ringe kondensiert sind, ein Tetraphenylporphin oder ein Organometallkomplex davon, wobei die äußeren Oberflächen der Polymerteilchen im Wesentlichen frei von dem hydrophoben Fluorochrom sind, wobei die Teilchen eine Nachweisschwelle für die Fluoreszenz aufweisen, die kleiner oder gleich $10^{-12}$ Mol Teilchen pro Liter Latex ist, und die Konzentration des hydrophoben Fluorochroms im Bereich von 0,1% bis 2% liegt, bezogen auf das Trockengewicht des Latex. Die Herstellung kann beispielsweise durch Emulsionspolymerisation, Mikro-Emulsionspolymerisation oder Polymerisation in einem organischen Medium erfolgen.

Aus der US-A-2005 075 453 ist ein Verfahren zur Herstellung farbstoffenthaltender, wässriger Polymerisatdispersionen durch radikalische, wässrige Emulsionspolymerisation ethylenisch ungesättigter Monomere bekannt, wobei man wenigstens einen Teil der Monomere in Form einer Öl-in-Wasser-Emulsion einsetzt, deren disperse Phase wenigstens einen öllöslichen Farbstoff enthält.

In der WO-A-2005/105 931 wird ein Verfahren zur Herstellung einer wässrigen Dispersion polymerverkapselter Pigmente beschrieben, wobei (a) eine wässrige Pigmentdispersion, enthaltend mindestens ein organisches Pigment P aus der Gruppe der Azo-, Isoindolinon-, Isoindolin-, Anthanthron-, Thioindigo-, Thiazinindigo-, Triarylcarbonium-, Chinophthalon-, Anthrachinon-, Dioxazin-, Phthalocyanin-, Chinacridon-, Chinacridonchinon-, Indanthron-, Perylen-, Perinon-, Pyranthron-, Diketopyrrolopyrrol-, Isoviolanthron- und Azomethinpigmente, mindestens ein Tensid T, und Wasser, bereitgestellt wird; (b) eine durch eine hydrophobe organische Verbindung, die eine Wasserlöslichkeit bei 20°C von höchstens $5 \times 10^{-5}$ g/l aufweist, stabilisierte Monomer-Miniemulsion aus mindestens einem polymerisierbaren Monomer M und mindestens einem Tensid T, in Wasser bereitgestellt wird; (c) eine pigmenthaltige Monomer-Miniemulsion hergestellt wird, indem man die wässrige Pigmentdispersion aus (a) und die Monomer-Miniemulsion aus (b) zusammengegeben und homogenisiert wird, sowie (d) die pigmenthaltige Monomer-Miniemulsion aus (c) in Gegenwart eines Polymerisationsstarters und/oder durch Wärme polymerisiert wird, wobei eine Verkapselung des Pigments mit dem dabei entstehenden Polymer stattfindet.

Die EP-A-0 590 935 beschreibt eine wässrige Dispersion eines fluoreszierenden Pigments, umfassend ein wasserunlösliches Polymer, einen Fluoreszenzfarbstoff, Emulgatoren und Wasser, wobei das Polymer ein wasserunlösliches Vinylmonomer, das frei von polaren Gruppen ist, Vinylnitril, ein Vinylmonomer, das Sulfonatgruppen enthält, und ein polares Vinylmonomer aus der Gruppe bestehend aus polaren Acrylatestern, Vinylacetat, polaren Methacrylatester und ein substituiertes Acrylamid, das Hydroxyl- oder Carbonsäureestergruppen enthält, umfasst. Weiterhin werden auch ein fluoreszierendes Pigment und ein Verfahren zur Herstellung der Dispersion und des Pigments beschrieben.

Aus der US-B-4 016 133 sind farbige Harzpartikel bekannt, die gleichmäßig und dicht gefärbt sind und ausgezeichnete Fluoreszenz, Lichtechtheit und Waschbeständigkeit aufweisen, welche in einem wässrigen Medium in Gegenwart eines wasserlöslichen fluoreszierenden Farbstoffs hergestellt werden durch Copolymerisation von (1) einem polymerisierbaren ungesättigten Monomer A mit niedriger Affinität für den fluoreszierenden Farbstoff, (2) einem polymerisierbaren ungesättigten Monomer B mit mindestens einer Cyanogruppe und (3) einem polymerisierbaren ungesättigtem Monomer C, das eine hohe Affinität für den Fluoreszenzfarbstoff aufweist und in Wasser unlöslich oder kaum löslich ist.

In keinem der vorstehend genannten Dokumente werden wässrige Dispersionen von Polymeren gemäß Anspruch 1 beschrieben.

Der Erfindung liegt die Aufgabe zugrunde, wässrige Dispersionen von Polymeren, die einen Teilchendurchmesser von mindestens 1 $\mu$m haben und die einen Fluoreszenzfarbstoff enthalten, mit einer möglichst einheitlichen Teilchengrößenverteilung zur Verfügung zu stellen. Solche Polymerdispersionen sind insbesondere für die Einpartikelanalytik von Interesse, weil Teilchengrößen von beispielsweise 1 bis 100 $\mu$m besonders vorteilhaft analytisch bestimmt werden können.

Die Aufgabe wird erfindungsgemäß gelöst mit wässrigen Dispersionen von Polymeren, die einen Teilchendurchmesser von mindestens 1 $\mu$m haben und die einen Fluoreszenzfarbstoff enthalten, die erhältlich sind durch radikalische Suspensionspolymerisation von ethylenisch ungesättigten Monomeren in einer Öl-in-Wasser-Emulsion, deren disperse Phase mindestens einen Fluoreszenzfarbstoff in mindestens einem ethylenisch ungesättigten Monomer gelöst enthält und einen mittleren Teilchendurchmesser von mindestens 1 $\mu$m aufweist, in Gegenwart mindestens einer oberflächenaktiven Verbindung und zusätzlich mindestens 0,5 Gew.-%, bezogen auf die Monomeren, mindestens einer hydrophoben, nichtpolymerisierbaren, organischen Verbindung, wobei man als hydrophobe, nichtpolymerisierbare organische Verbindung aliphatische Kohlenwasserstoffe mit 10 bis 50 C-Atomen, Alkohole mit 10 bis 24 C-Atomen, Tetraalkylsilane, Olivenöl, Perfluormethyldekalin und/oder Di-n-butylester von $C_4$- bis $C_6$-Dicarbonsäuren einsetzt, eines hydrophoben Polymeren aus mindestens einem $C_2$-bis $C_6$-Olefin mit einer Molmasse $M_w$ bis zu 10 000, eines Siloxans mit einer Molmasse $M_w$ bis zu 5 000 und/oder Polystyrol mit einer Molmasse $M_w$ bis zu 10 000, wobei "hydrophob" eine Löslichkeit in Wasser von kleiner 0,01 g/l (bei 25 °C und 1013 mbar) bedeutet.

Die Synthese der in Wasser dispergierten Polymerteilchen erfolgt erfindungsgemäß durch Suspensionspolymerisation. Im Gegensatz zu dem Verfahren, das aus der obengenannten EP-B-0692 517 bekannt ist, wird bei dem erfindungsgemäßen Verfahren außer den Monomeren, mindestens einem Fluoreszenzfarbstoff und einer oberflächenaktiven Verbindung zusätzlich ein in Wasser nur sehr wenig lösliches Cosolvenz für den Fluoreszenzfarbstoff als Hydrophob eingesetzt. Die Wasserlöslichkeit des Hydrophobs beträgt <0,01 g/l (bei 25°C und 1013 mbar). Man kann sämtliche hydrophobe Verbindungen einsetzen, die üblicherweise bei der Miniemulsionspolymerisation verwendet werden, vgl. WO-A-99/40123, Seite 7, Zeile 27 bis Seite 8, Zeile 20. Im Unterschied zur Herstellung einer Miniemulsion wird jedoch erfindungsgemäß bei der Emulgierung der mindestens einen Fluoreszenzfarbstoff enthaltenden Lösung aus wenigstens Monomeren und einem Hydrophob in Wasser nicht so stark geschert, so dass man eine Öl-in-Wasser-Emulsion mit einer mittleren Teilchengröße von mindestens 1 $\mu$m erhält. Die mittlere Teilchengröße der Öl-in-Wasser-Emulsion liegt damit deutlich über der bei Miniemulsionen üblichen Teilchengröße. Aus den emulgierten Monomertröpfchen entstehen die dispergierten Polymerteilchen, die den Fluoreszenzfarbstoff gleichmäßig verteilt enthalten. Dieses Verfahren kann man auch als Mini-Suspensionspolymerisation bezeichnen.

Man erhält erfindungsgemäß wässrige Dispersionen von Polymeren, die mindestens einen Fluoreszenzfarbstoff enthalten, eine mittlere Teilchengröße in dem Bereich von 1 bis 100 $\mu$m haben und die eine engere Teilchengrößenverteilung aufweisen als die Polymerdispersionen, die unter Ausschluss von hydrophoben Verbindungen hergestellt werden, vgl. EP-B-0 692 517. Gegenüber dem bekannten Verfahren wird bei dem erfindungsgemäßen Verfahren weniger Koagulat gebildet, außerdem wird die Emulsionspolymerisation als Nebenreaktion weitestgehend unterdrückt.

Als ethylenisch ungesättigte Monomere kommen beispielsweise

(a) hydrophobe Monomere aus der Gruppe $C_1$- bis $C_8$-Alkylester der Acrylsäure, $C_1$-bis $C_8$-Alkylester der Methacrylsäure, Vinylacetat, Vinylpropionat, Vinylbutyrat, Styrol, Chlorstyrol und/oder $\alpha$-Methylstyrol,

(b) gegebenenfalls hydrophile Monomere aus der Gruppe ethylenisch ungesättigter $C_3$- bis $C_6$-Carbonsäuren, Vinylsulfonsäure, 2-Acrylamido-2-methylpropansulfonsäure, Sulfopropylacrylat, Sulfopropylmethacrylat, Styrolsulfonsäure, Salze der genannten Säuren, Acrylnitril, Methacrylnitril, $C_1$- bis $C_8$-Hydroxyalkylester von $C_1$- bis $C_6$-Carbonsäuren, Di-$C_1$- bis $C_3$-alkylamino-$C_2$-bis $C_4$-alkylacrylate, Di-$C_1$- bis $C_3$-alkylamino-$C_2$- bis $C_4$-alkylmethacrylate, Acrylamid, Methacrylamid, N-Vinylformamid und/oder N-Vinylpyrrolidon und

(c) gegebenenfalls mindestens ein vernetzend wirkendes Monomer mit mindestens zwei Doppelbindungen im Molekül

in Betracht.

Die Monomeren der Gruppe (a) können allein, in Mischung untereinander sowie in Kombination mit den Monomeren (b) und/oder (c) bei der Suspensionspoylmerisation eingesetzt werden. Beispiele für Monomere der Gruppe (a) sind Methylacrylat, Ethylacrylat, Isopropylacrylat, n-Propylacrylat, n-Butylacrylat, Isobutylacrylat, tert.-Butylacrylat, sek.-Butylacrylat, Pentylacrylat, n-Hexylacrylat, Octylacrylat, 2-Ethylhexylacrylat, Decylacrylat, Dodecylacrylat, Palmitylacrylat, Stearylacrylat, Methylmethacrylat, Ethylmethacrylat, Isopropylmethacrylat, n-Propylmethacrylat, n-Butylmethacrylat, Isobutylmethacrylat, sek.-Butylmethacrylat, tert.-Butylmethacrylat, Pentylmethacrylat, n-Hexylmethacrylat, Cyclohexylmethacrylat, Heptylmethacrylat, 2-Ethylhexylmethacrylat, Octylmethacrylat, Decylmethacrylat, Dodecylmethacrylat, Palmitylmethacrylat und Stearylmethacrylat sowie Vinylacetat, Vinylpropionat, Vinylbutyrat, Styrol, Chlorstyrol und/oder $\alpha$-Methylstyrol. Bevorzugt eingesetzte Monomere dieser Gruppe sind Methylmethacrylat und Styrol.

Monomere der Gruppe (b), die gegebenenfalls zur hydrophilen Modifizierung der Polymeren eingesetzt werden, sind beispielsweise ausgewählt aus der Gruppe der ethylenisch ungesättigten $C_3$- bis $C_6$-Carbonsäuren, Vinylsulfonsäure, 2-Acrylamido-2-methylpropansulfonsäure, Sulfopropylacrylat, Sulfopropylmethacrylat, Styrolsulfonsäure, Salze der genannten Säuren, Acrylnitril, Methacrylnitril, $C_1$- bis $C_8$-Hydroxyalkylester von $C_1$- bis $C_6$-Carbonsäuren, Di-$C_1$- bis $C_3$-alkylamino-$C_2$- bis $C_4$-alkylacrylate, Di-$C_1$- bis $C_3$-alkylamino-$C_2$- bis $C_4$-alkylmethacrylate, Acrylamid, Methacrylamid, N-Vinylformamid und/oder N-Vinylpyrrolidon.

Beispiele für ethylenisch ungesättigte Carbonsäuren sind Acrylsäure, Methacrylsäure, Crotonsäure, Maleinsäure, Fumarsäure, Itaconsäure und Vinylessigsäure. Die ethylenisch ungesättigten Carbonsäuren sowie die Sulfogruppen enthaltenden Monomeren können in Form der freien Säuren sowie in partiell oder vollständig mit Alkalimetall-, Erdalkalimetallbasen, Ammoniak oder Aminen neutralisierter Form bei der Polymerisation eingesetzt werden. Meistens setzt man die Natrium-, Kalium- oder Ammoniumsalze der sauren Monomeren ein. Die sauren Monomeren können jedoch auch mit Aminen wie Butylamin, Morpholin, Ethanolamin, Diethanolamin oder Triethanolamin neutralisiert und in partiell oder vollständig neutralisierter Form bei der Polymerisation eingesetzt werden. Von den Hydroxyalkylestern kommen insbesondere 2-Hydroxyethylacrylat, 2-Hydroxyethylmethacrylat, Hydroxypropylacrylat, Hydroxybutylacrylat und 2-Hydroxypropylmethacrylat in Betracht.

Beispiele für basische Monomere sind Dimethylaminoethylacrylat, Dimethylaminoethylmethacrylat, Dimethylaminopropylacrylat, Dimethylaminopropylmethacrylat, Diethylaminoethylacrylat, Diethylaminoethylmethacrylat, Di-n-Propylaminoethylacrylat und Di-n-Propylaminoethylmethacrylat. Die basischen Monomeren können als freie Base, als Salz mit Mineralsäuren, gesättigten Carbonsäuren oder Sulfonsäuren wie p-Toluolsulfonsäure oder Benzolsulfonsäure sowie in quaternierter Form (z.B. quaterniert mit Methylchlorid, Ethylchlorid, n-Propylchlorid, Dimethylsulfat, n-Hexylchlorid, Cyclohexylchlorid oder Benzylchlorid) bei der Polymerisation verwendet werden.

Die Monomeren der Gruppe (b) können einzeln oder in Kombination bei der Polymerisation eingesetzt werden.

Vorzugsweise verwendet man aus dieser Gruppe Acrylsäure, Methacrylsäure, Acrylamid, Methacrylamid, Vinylformamid und N-Vinylpyrrolidon.

Als Monomere der Gruppe (c) setzt man vernetzend wirkende Monomere mit mindestens zwei Doppelbindungen im Molekül ein. Beispiele für solche Monomere sind Ester aus mehrwertigen Alkoholen und ethylenisch ungesättigten Carbonsäuren wie Acrylsäure oder Methacrylsäure z.B. Ethylenglykoldiacrylat, Ethylenglykoldimethacrylat, Butandioldiacrylat, Butandioldimethacrylat, Hexandioldiacrylat, Hexandioldimethacrylat, Acrylate und Methacrylate von Polyalkylenglykolen wie Polyethylenglykolen, Polypropylenglykolen oder Blockcopolymeren aus Ethylenoxid und Propylenoxid mit Molmassen von beispielsweise 100 bis 5000, Allylacrylat, Allylmethacrylat, Trimethylolpropantriacrylat, Trimethylolpropantrimethacrylat, Pentaerythrittriacrylat, Pentaerythrittrimethacrylat, Pentaerythrittetraacrylat, Pentaerythrittetramethacrylat, Divinylbenzol, Divinylharnstoff und Methylenbisacrylamid. Bevorzugt kommen Allylmethacrylat, Butandiol-1,4-diacrylat und Trimethylolpropantriacrylat als Vernetzer in Betracht.

Die bei der Polymerisation eingesetzten Monomergemische enthalten beispielsweise

(a) 60 bis 100 Gew.-% mindestens eines hydrophoben Monomeren,

(b) 0 bis 30 Gew.-% mindestens eines hydrophilen Monomeren und

(c) 0 bis 40 Gew.-% mindestens eines vernetzend wirkenden Monomeren mit mindestens zwei Doppelbindungen.

Vorzugsweise setzt man bei der Polymerisation Monomergemische ein, die

(a) 60 bis 99,9 Gew.-% mindestens eines hydrophoben Monomeren,

(b) 0 bis 30 Gew.-% mindestens eines hydrophilen Monomeren und

(c) 0,1 bis 25 Gew.-%, insbesondere 5 bis 15 Gew.-% mindestens eines vernetzend wirkenden Monomeren

enthalten.

Fluoreszenzfarbstoffe sind dem Fachmann bekannt. Sie werden beispielsweise in der zum Stand der Technik genannten WO-A-99/40123, Seite 10, Zeile 14 bis Seite 25, Zeile 25 und in der EP-B-0 692 517, Seite 3, Zeile 7 bis Seite 6, Zeile 1, beschrieben. Geeignete Fluoreszenzfarbstoffe gehören beispielsweise zu der Klasse der Cumarin-, Perylen-, Terrylen-, Quaterrylen-, Naphthalimid-, Cyanin-, Xanthen-, Oxazin-, Anthracen-, Naphthacen-, Anthrachinon- oder Thiazin-Farbstoffe. Vorzugsweise werden solche Fluoreszenzfarbstoffe verwendet, die eine höhere Löslichkeit in der Ölphase als in der wässrigen Phase der Öl-in-Wasser-Emulsion haben. Beispielsweise sollten die Farbstoffe eine Löslichkeit von wenigstens 0,001 Gew.-%, vorzugsweise von wenigstens 0,01 Gew.-% in der Ölphase haben.

Um wässrige Dispersionen von feinteiligen Polymeren herzustellen, die einen Fluoreszenzfarbstoff enthalten und einen mittleren Teilchendurchmesser von mindestens 1 $\mu$m haben, kann man beispielsweise so vorgehen, dass man zunächst mindestens einen Fluoreszenzfarbstoff in einer Mischung aus mindestens einem der in Betracht kommenden Monomeren und mindestens einer hydrophoben Verbindung löst und diese Lösung dann in einer wässrigen Phase emulgiert, die mindestens eine oberflächenaktive Verbindung enthält. Das Emulgieren der Ölphase in die wässrige Phase kann beispielsweise mit Hilfe eines schnelllaufenden Rührers oder mit Hilfe von Vorrichtungen durchgeführt werden, die nach dem Rotor-Stator-Prinzip arbeiten wie Ultra-Turrax®. Man erhält Öl-in-Wasser-Emulsionen mit einer mittleren Teilchengröße der Öltröpfchen von mindestens 1 $\mu$m bis 100 $\mu$m, vorzugsweise 1,1 bis 25 $\mu$m.

Ein wesentlicher Bestandteil der erfindungsgemäßen wässrigen Dispersionen von Polymeren, die mindestens einen Fluoreszenzfarbstoff enthalten, ist ein Hydrophob. Beispiele dafür sind hydrophobe, nichtpolymerisierbare, organische Verbindungen, hydrophobe Polymere aus mindestens einem $C_2$-bis $C_6$-Olefin mit einer Molmasse $M_w$ bis zu 10 000, Siloxane mit einer Molmasse $M_w$ bis zu 5 000 und/oder Polystyrole mit einer Molmasse $M_w$ bis zu 10 000. Unter hydrophoben, nichtpolymerisierbaren, organischen Verbindungen sollen alle Verbindungen verstanden werden, die beispielsweise eine Löslichkeit in Wasser von <0,01 g/l (bei 25°C und 1013 mbar) aufweisen. Beispiele hierfür sind aliphatische oder aromatische Kohlenwasserstoffe mit 10 bis 50 C-Atomen, bevorzugt mit 10 bis 24 C-Atomen, Alkohole mit 10 bis 24 C-Atomen, Tetraalkylsilane, Olivenöl, Perfluormethyldekalin und/oder Di-n-butylester von $C_4$- bis $C_6$-Dicarbonsäuren. Besonders bevorzugt eingesetzte hydrophobe Verbindung aus dieser Gruppe sind Hexadekan und flüssige Paraffine, wie das technische oder medizinische Weißöl. Ein solches Weißöl ist beispielsweise unter der CAS-Nr. 8042-47-5 erhältlich. Dabei handelt es sich um ein Erdöl-Mineralöl als komplexe Kombination von gesättigten Kohlenwasserstoffen mit Kohlenstoffzahlen im Bereich von C15 bis C50. Man kann auch Mischungen von hydrophoben, nichtpolymerisierbaren organischen Verbindungen einsetzen, beispielsweise Gemische von Hexadekan und Weißöl. Es wird - wie auch die anderen hydrophoben Verbindungen - beispielsweise in einer Menge von 0,5 bis 50 Gew.-%, bevorzugt in einer Menge von 1 bis 20 Gew.-%, bezogen auf die Monomeren, eingesetzt.

Als Hydrophob kommen weiterhin Homopolymerisate mindestens eines $C_2$-bis $C_6$-Olefins oder Copolymerisate aus $C_2$- bis $C_6$-Olefinen mit einer Molmasse $M_w$ bis zu 10 000 in Betracht. Polymere dieser Art sind beispielsweise

(i) Homopolymerisate aus Ethylen, Propylen, Buten-1, Buten-2, Penten-1 oder Hexen-1 mit einer mittleren Molmasse

$M_w$ von 100 bis 1000,
(ii) Copolymerisate aus mindestens zwei der unter (i) genannten Monomeren mit einer mittleren Molmasse $M_w$ von 100 bis 1000 und/oder
(iii) Polyisobutylen mit einer mittleren Molmasse $M_w$ von mindestens 100.

Beispiele für Polymere der Gruppe (i) sind niedrigmolekulare Homopolymerisate von Ethylen, Propylen, Buten-1, Penten-1 und Hexen-1. Es handelt sich hierbei z.B. um Oligomere des Ethylens wie insbesondere 8 oder 12 Kohlenstoffatome pro Molekül enthaltende Polymere, die beispielsweise von der Firma Shell unter der Marke Neodene® und von der Firma BP als alpha-Olefin z.B. AO 2026 sowie von der Firma Chevron-Phillips Corporation angeboten werden. Als Verbindung (i) kommt außerdem das von der Firma Exxon-Mobil angebotene Tetramer-Propen und das von der Firma Oxeno vertriebene Tetra-Buten in Betracht. Die Verbindungen (i) enthalten eine Doppelbindung. Sie haben beispielsweise eine mittlere Molmasse $M_w$ von 100 bis 10 000, vorzugsweise 150 bis 2 000.

Beispiele für Verbindungen (ii) sind Copolymerisate aus Ethylen und Propylen, Copolymerisate aus Ethylen und Buten-1, Copolymerisate aus Ethylen und Buten-2, Copolymerisate aus Ethylen und Hexen-1, Copolymerisate aus Propylen und Buten-1 und Copolymerisate aus Propylen, Buten-1 und Buten-2 sowie weitere Kombinationen. Diese Copolymerisate enthalten ebenfalls noch eine ethylenisch ungesättigte Doppelbindung. Sie haben beispielsweise mittlere Molmassen $M_w$ von 100 bis 10 000, vorzugsweise 150 bis 2 000.

Als Verbindungen der Gruppe (iii) kommen Polyisobutylene in Betracht. Sie haben beispielsweise eine mittlere Molmasse $M_w$ von mindestens 100, vorzugsweise mindestens 150. Die mittleren Molmassen $M_w$ liegen z. B. in dem Bereich von 200 bis 10 000. Meistens beträgt die mittlere Molmasse $M_w$ der in Betracht kommenden Polyisobutylene mindestens 400 und liegt vorzugsweise in dem Bereich von 500 bis 4 000.

Geeignete Polyisobutylene sind im Handel erhältlich. Beispiele hierfür sind die Glissopal® Marken und Oppanol® Marken der BASF Aktiengesellschaft, wie Glissopal® 550, Glissopal® 1000, Glissopal® 1300, Glissopal® 2300, Oppanol B10 und B12. Polyisobutylen wird z.B. durch kationische Polymerisation von Isobuten unter $BF_3$-Katalyse hergestellt. Diese Polyisobutylene weisen einen hohen Gehalt an $\alpha$-Olefin-Gruppen auf, der beispielsweise mindestens 80 %, vorzugsweise mindestens 85 % beträgt. Sie können auch durch sog. "lebende" Polymerisation mit von $BF_3$ verschiedenen Lewis-Säuren wie $AlY_3$, $TiY_4$, $SnY_4$ und $ZnY_2$ hergestellt werden, wobei in den vorangehenden Formeln der Substituent Y für Fluor, Chlor, Brom oder Jod steht. Polyisobutylene mit einem Gehalt an $\alpha$-Olefin-Gruppen von mindestens 80 % werden bevorzugt eingesetzt. Weitere Beispiele für erfindungsgemäß als (iii) einzusetzende Verbindungen sind die von der Firma BP unter dem Namen Indopol® angebotenen Polyisobutylene mit den Bezeichnungen L2-L-50 sowie H-7 bis H-18 000, die eine Molmasse in dem Bereich von 180 bis 6 000 haben. Diese Polyisobutylene enthalten ebenfalls $\alpha$-Olefin-Gruppen, jedoch nur bis zu ca. 10 %.

Je nach Polymerisationsverfahren liegt der Polydispersitätsindex (PDI) für diese Polymeren, d.h. das Verhältnis aus gewichtsmittlerem und zahlenmittlerem Molekulargewicht in dem Bereich von 1,05 bis 10, bevorzugt in dem Bereich von 1,05 bis 5 und insbesondere in dem Bereich von 1,05 bis 2,0. Die Bestimmungsmethode der Polydispersität (PDI) sowie des zahlen- und gewichtsmittleren Molekulargewichts ist beispielsweise im Analytiker-Taschenbuch, Band 4, Seiten 433 bis 442, Berlin 1984, beschrieben.

Bevorzugt eingesetzte hydrophobe Verbindungen aus diesen Gruppen sind beispielsweise (i) Tetramer-Propen und tetrameres Buten, (ii) Copolymerisate aus Ethylen und Propylen, Copolymerisate aus Ethylen und Buten-1, Copolymerisate aus Ethylen und Buten-2, Copolymerisate aus Ethylen und Hexen-1, Copolymerisate aus Propylen und Buten-1 und Copolymerisate aus Propylen, Buten-1 und Buten-2 mit einer Molmasse von jeweils 150 bis 2 000 und/oder (iii) Polyisobutylene mit einer Molmasse in dem Bereich von 200 bis 10 000.

Weitere geeignete Hydrophobe sind Siloxane mit einer Molmasse $M_w$ bis zu 5 000 und/oder Polystyrole mit einer Molmasse $M_w$ bis zu 10 000.

Um die Öl-in-Wasser-Emulsion zu stabilisieren, verwendet man üblicherweise mindestens eine oberflächenaktive Verbindung. Das oberflächenaktive Mittel wird beispielsweise in Mengen bis zu 15 Gew.-%, beispielsweise von 0,05 bis 15 Gew.-%, vorzugsweise von 0,05 bis 5 Gew.-% und insbesondere von 0,1 bis 2 Gew.-%, jeweils bezogen auf die gesamte Dispersion, eingesetzt. Man findet es entweder in der wässrigen Phase, der organischen Phase oder in beiden Phasen. Es wird vorzugsweise vor dem Emulgieren zur wässrigen Phase zugegeben. Man kann prinzipiell alle oberflächenaktiven Mittel verwenden. Bevorzugt eingesetzte oberflächenaktive Mittel sind anionische und/oder nichtionische Tenside sowie amphiphile Polymerisate mit mittleren Molmassen $M_w$ von beispielsweise 1000 bis 100 000. Beispiele für geeignete oberflächenaktive Mittel sind Natriumlaurylsulfat, Natriumdodecylsulfat, Natriumhexadecylsulfat, Natriumdioctylsulfosuccinat und/oder Additionsprodukte von 15 bis 50 Mol Ethylenoxid und/oder Propylenoxid an 1 Mol eines $C_{12}$- bis $C_{22}$-Alkohols.

Die Öl-in-Wasser-Emulsion kann zusätzlich auch mit Hilfe von amphiphilen Polymeren stabilisiert werden, die gegebenenfalls eingesetzt werden. Sofern man amphiphile Polymere verwendet, setzt man sie in Mengen von beispielsweise 0,05 bis 15 Gew.-%, vorzugsweise 0,5 bis 5 Gew.-%, bezogen auf die bei der Polymerisation eingesetzten Monomeren ein. Beispiele für amphiphile Polymere sind Copolymerisate, die Einheiten von

(i) hydrophoben monoethylenisch ungesättigten Monomeren und

(ii) monoethylenisch ungesättigten Carbonsäuren, monoethylenisch ungesättigten Sulfonsäuren, monoethylenisch ungesättigten Phosphonsäuren oder deren Mischungen und/oder basischen Monomeren

enthalten.

Geeignete hydrophobe monoethylenisch ungesättigte Monomere

(i) sind beispielsweise Styrol, Methylstyrol, Ethylstyrol, Acrylnitril, Methacrylnitril, $C_2$- bis $C_{18}$-Olefine, Ester aus monoethylenisch ungesättigten $C_3$- bis $C_5$-Carbonsäuren und einwertigen Alkoholen, Vinylalkylether, Vinylester oder deren Mischungen. Aus dieser Gruppe von Monomeren verwendet man vorzugsweise Isobuten, Diisobuten, Styrol und Acrylsäureester wie Ethylacrylat, Isopropylacrylat, n-Butylacrylat und sec.-Butylacrylat.

Die amphiphilen Copolymerisate enthalten als hydrophile Monomere

(ii) vorzugsweise Acrylsäure, Methacrylsäure, Maleinsäure, Maleinsäureanhydrid, Itaconsäure, Vinylsulfonsäure, 2-Acrylamidomethylpropansulfonsäure, Acrylamidopropan-3-sulfonsäure, 3-Sulfopropylacrylat, 3-Sulfopropylmethacrylat, Styrolsulfonsäure, Vinylphosphonsäure oder deren Mischungen in einpolymerisierter Form. Die sauren Monomeren können in Form der freien Säuren oder in partiell oder vollständig neutralisierter Form vorliegen.

Weitere geeignete hydrophile Monomere sind basische Monomere. Sie können mit den hydrophoben Monomeren (i) allein oder auch in Mischung mit den vorstehend genannten sauren Monomeren polymerisiert werden. Wenn man Mischungen aus basischen und sauren Monomeren einsetzt, entstehen amphotere Copolymerisate, die je nach Molverhältnis der jeweils einpolymerisierten sauren zu basischen Monomeren anionisch oder kationisch geladen sind. [0048]  Basische Monomere sind beispielsweise Di-$C_1$- bis $C_2$-alkylamino-$C_2$- bis $C_4$-alkyl(meth)acrylate oder Diallyldimethylammoniumchlorid. Die basischen Monomeren können in Form der freien Basen, der Salze mit organischen oder anorganischen Säuren oder in der mit Alkylhalogeniden quaternierten Form vorliegen. Die Salzbildung bzw. die Quaternierung, bei der die basischen Monomeren kationisch werden, kann teilweise oder vollständig erfolgt sein. Beispiele für solche Verbindungen sind Dimethylaminoethylmethacrylat, Diethylaminoethylmethacrylat, Dimethylaminoethylacrylat, Diethylaminoethylacrylat, Dimethylaminopropylmethacrylat, Dimethylaminopropylacrylat, Diethylaminopropylmethacrylat, Diethylaminopropylacrylat und/oder Dimethylaminoethylacrylamid, Dimethylaminoethylmethacrylamid, Dimethylaminopropylacrylamid, Dimethylaminopropylmethacrylamid und/oder Diallyldimethylammoniumchlorid.

Sofern die amphiphilen Copolymerisate in Form der freien Säure nicht ausreichend wasserlöslich sind, werden sie in Form von wasserlöslichen Salzen eingesetzt, z.B. verwendet man die entsprechenden Alkalimetall-, Erdalkalimetall- und Ammoniumsalze. Diese Salze werden beispielsweise durch partielle oder vollständige Neutralisation der freien Säuregruppen der amphiphilen Copolymerisate mit Basen hergestellt, z.B. verwendet man zur Neutralisation Natronlauge, Kalilauge, Magnesiumoxid, Ammoniak oder Amine wie Triethanolamin, Ethanolamin, Morpholin, Triethylamin oder Butylamin. Vorzugsweise werden die Säuregruppen der amphiphilen Copolymerisate mit Ammoniak oder Natronlauge neutralisiert. Die Wasserlöslichkeit von basischen Monomeren bzw. von Copolymerisaten, die solche Monomere einpolymerisiert enthalten, kann dagegen durch partielle oder vollständige Neutralisation mit einer Mineralsäure wie Salzsäure oder Schwefelsäure oder durch Zusatz einer organischen Säure wie Essigsäure oder p-Toluolsulfonsäure, erhöht werden. Die Molmasse der amphiphilen Copolymerisate beträgt beispielsweise 1000 bis 100 000 und liegt vorzugsweise in dem Bereich von 1500 bis 10 000. Die Säurezahlen der amphiphilen Copolymerisate betragen beispielsweise 50 bis 500, vorzugsweise 150 bis 350 mg KOH/g Polymer.

Besonders bevorzugt sind solche amphiphilen Copolymerisate, die

(i) 95 bis 45 Gew.-% Isobuten, Diisobuten, Styrol oder deren Mischungen und
(ii) 5 bis 55 Gew.-% Acrylsäure, Methacrylsäure, Maleinsäure, Halbester von Maleinsäure oder deren Mischungen

einpolymerisiert enthalten. Besonders bevorzugt werden Copolymerisate als Stabilisator für die Miniemulsion eingesetzt, die

(i) 45 bis 80 Gew.-% Styrol,
(ii) 55 bis 20 Gew.-% Acrylsäure und gegebenenfalls
(iii) zusätzlich weitere Monomere

einpolymerisiert enthalten. Die Copolymerisate können gegebenenfalls als weitere Monomere (iii) Einheiten von Maleinsäurehalbestern einpolymerisiert enthalten. Solche Copolymerisate sind beispielsweise dadurch erhältlich, dass man Copolymerisate aus Styrol, Diisobuten oder Isobuten oder deren Mischungen mit Maleinsäureanhydrid in Abwesenheit von Wasser copolymerisiert und die Copolymerisate im Anschluss an die Polymerisation mit Alkoholen umsetzt, wobei man pro Mol Anhydridgruppen im Copolymerisat 5 bis 50 Mol-% eines einwertigen Alkohols einsetzt. Geeignete Alkohole sind beispielsweise Methanol, Ethanol, n-Propanol, Isopropanol, n-Butanol, Isobutanol und tert.-Butanol. Man kann jedoch auch die Anhydridgruppen der Copolymerisate mit mehrwertigen Alkoholen wie Glykol oder Glycerin umsetzen. Hierbei wird die Reaktion jedoch nur soweit geführt, dass nur eine OH-Gruppe des mehrwertigen Alkohols mit der Anhydridgruppe reagiert. Sofern die Anhydridgruppen der Copolymerisate nicht vollständig mit Alkoholen umgesetzt werden, erfolgt die Ringöffnung der nicht mit Alkoholen umgesetzten Anhydridgruppen durch Zugabe von Wasser.

Andere als Stabilisator für Öl-in-Wasser-Emulsionen geeignete Verbindungen sind beispielsweise handelsübliche Polymerisate von monoethylenisch ungesättigten Säuren sowie Pfropfpolymerisate von N-Vinylformamid auf Polyalkylenglykolen, die beispielsweise in der WO-A-96/34903 beschrieben werden. Die aufgepfropften Vinylformamideinheiten können gegebenenfalls hydrolysiert sein, beispielsweise bis zu 10 %. Der Anteil an aufgepfropften Vinylformamideinheiten beträgt vorzugsweise 20 bis 40 Gew.-%, bezogen auf Polyalkylenglykol. Vorzugsweise verwendet man Polyethylenglykole mit Molmassen von 2000 bis 10 000.

Außerdem kommen zur Stabilisierung der Öl-in-Wasser-Emulsionen zwitterionische Polyalkylenpolyamine und zwitterionische Polyethylenimine in Betracht. Solche Verbindungen sind beispielsweise aus der EP-B-0 112 592 bekannt. Sie sind beispielsweise dadurch erhältlich, dass man ein Polyalkylenpolyamin oder Polyethylenimin zunächst alkoxyliert, z.B. mit Ethylenoxid, Propylenoxid und/oder Butylenoxid und die Alkoxylierungsprodukte anschließend quaternisiert, z.B. mit Methylbromid oder Dimethylsulfat und die quaternierten, alkoxylierten Produkte dann mit Chlorsulfonsäure oder Schwefeltrioxid sulfatiert. Die Molmasse der zwitterionischen Polyalkylenpolyamine beträgt beispielsweise 1000 bis 9000, vorzugsweise 1500 bis 7500. Die zwitterionischen Polyethylenimine haben vorzugsweise Molmassen in dem Bereich von 1500 bis 7500 Dalton. Die anderen, oben genannten Stabilisatoren werden gegebenenfalls in Kombination mit einem oberflächenaktiven Mittel zur Stabilisierung der Emulsionen angewendet. Falls sie eingesetzt werden, verwendet man sie beispielsweise in Mengen von 0,05 bis 15 Gew.-%, vorzugsweise 0,5 bis 5 Gew.-%, bezogen auf die Monomeren.

Um stabile wässrige Polymerdispersionen zu erhalten, kann man die Polymerisation gegebenenfalls noch zusätzlich in Gegenwart von Schutzkolloiden durchführen. Sie haben in der Regel mittlere Molmassen $M_w$ von oberhalb 500, vorzugsweise von mehr als 1000. Beispiele für Schutzkolloide sind Polyvinylalkohole, Cellulosederivate wie Carboxymethylcellulose, Polyvinylpyrrolidon, Polyethylenglykole, Pfropfpolymerisate von Vinylacetat und/oder Vinylpropionat auf Polyethylenglykolen, ein- oder beidseitig mit Alkyl-, Carboxyl- oder Aminogruppen endgruppenverschlossene Polyethylenglykole, Polydiallyldimethylammoniumchloride und/oder Polysaccharide wie insbesondere wasserlösliche Stärken, Stärkederivate und Proteine. Solche Produkte werden beispielsweise beschrieben in Römpp, Chemie Lexikon, 9. Auflage, Band 5, Seite 3569 oder in Houben-Weyl, Methoden der organischen Chemie, 4. Auflage, Band 14/2, Kapitel IV Umwandlung von Cellulose und Stärke von E. Husemann und R. Werner, Seiten 862 - 915 und in Ullmanns Encyclopedia for Industrial Chemistry, 6. Auflage, Band 28, Seiten 533 ff unter Polysaccharides.

Geeignet sind beispielsweise alle Arten von Stärke, z.B. sowohl Amylose als auch Amylopektin, native Stärken, hydrophob oder hydrophil modifizierte Stärken, anionische Stärken, kationisch modifizierte Stärken, abgebaute Stärken, wobei der Stärkeabbau beispielsweise oxidativ, thermisch, hydrolytisch oder enzymatisch vorgenommen werden kann und wobei für den Stärkeabbau sowohl native als auch modifizierte Stärken eingesetzt werden können. Weitere geeignete Schutzkolloide sind Dextrine und vernetzte wasserlösliche Stärken, die wasserquellbar sind.

Vorzugsweise setzt man als Schutzkolloid native, wasserlösliche Stärken ein, die beispielsweise mit Hilfe eines Stärkeaufschlusses in eine wasserlösliche Form überführt werden können, sowie anionisch modifizierte Stärken wie oxidierte Kartoffelstärke. Besonders bevorzugt werden anionisch modifizierte Stärken, die einem Molekulargewichtsabbau unterworfen wurden. Der Molekulargewichtsabbau wird vorzugsweise enzymatisch durchgeführt. Die mittlere Molmasse $M_w$ der abgebauten Stärken beträgt beispielsweise 500 bis 100 000, vorzugsweise 1000 bis 30 000. Die abgebauten Stärken haben beispielsweise eine intrinsische Viskosität [η] von 0,04 bis 0,5 dl/g. Solche Stärken werden beispielsweise in der EP-B-0 257 412 und in der EP-B-0 276 770 beschrieben. Falls bei der Polymerisation Schutzkolloide eingesetzt werden, betragen die angewendeten Mengen beispielsweise 0,5 bis 50, insbesondere 5 bis 40 Gew.-%, meistens 10 bis 30 Gew.-%, bezogen auf die bei der Polymerisation eingesetzten Monomeren.

Um die Eigenschaften der Polymeren zu modifizieren, kann man die Polymerisation gegebenenfalls in Gegenwart mindestens eines Polymerisationsreglers durchführen. Beispiele für Polymerisationsregler sind organische Verbindungen, die Schwefel in gebundener Form enthalten wie Dodecylmercaptan, Thiodiglykol, Ethylthioethanol, Din-butylsulfid, Di-n-octylsulfid, Diphenylsulfid, Diisopropyldisulfid, 2-Mercaptoethanol, 1,3-Mercaptopropanol, 3-Mercaptopropan-1,2-diol, 1,4-Mercaptobutanol, Thioglykolsäure, 3-Mercaptopropionsäure, Mercaptobernsteinsäure, Thioessigsäure und Thioharnstoff, Aldehyde wie Formaldehyd, Acetaldehyd und Propionaldehyd, organische Säuren wie Ameisensäure, Natriumformiat oder Ammoniumformiat, Alkohole wie insbesondere Isopropanol sowie Phosphorverbindungen wie Natriumhypophosphit. Falls man bei der Polymerisation einen Regler einsetzt, so beträgt die jeweils verwendete Menge beispielsweise 0,01 bis 5, vorzugsweise 0,1 bis 1 Gew.-%, bezogen auf die bei der Polymerisation eingesetzten Monomeren.

Die Öl-in-Wasser-Emulsion wird radikalisch polymerisiert. Die Polymerisation erfolgt meistens in Gegenwart mindestens eines radikalischen Polymerisationsinitiators. Als Polymerisationsinitiator kommen sämtliche Verbindungen in Betracht, die eine Polymerisation auslösen können. Im Wesentlichen handelt es sich hierbei um Peroxide, Hydroperoxide, Azoverbindungen und Redoxkatalysatoren. Beispiele für Initiatoren können der WO-A-99/40123, Seite 32, Zeile 45 bis Seite 34, Zeile 9 entnommen werden. Die Polymerisation kann auch durch Einwirkung energiereicher Strahlung wie UV- oder aktinischer oder radioaktiver Strahlung ausgelöst werden, wobei man gegebenenfalls in Gegenwart mindestens eines Sensibilisators arbeitet. Vorzugsweise setzt man solche Initiatoren ein, die sich in der Ölphase lösen. Die Polymerisation der Monomeren in der Miniemulsion kann auch elektrochemisch, mit Hilfe von Mikrowellenstrahlen und/oder durch Einwirkung von Ultraschall erfolgen. Die Polymerisationstemperatur beträgt beispielsweise 0 bis 120°C, wobei sie bei Temperaturen oberhalb von 100°C unter erhöhtem Druck in druckdichten Apparaturen vorgenommen wird. Meistens führt man die Suspensionspolymerisation der Öl-in-Wasser-Emulsion in dem Temperaturbereich von 0 bis 95°C durch.

Gegenstand der Erfindung ist außerdem ein Verfahren zur Herstellung von wässrigen Dispersionen von Polymeren, die einen mittleren Teilchendurchmesser von mindestens 1 $\mu$m haben und die einen Fluoreszenzfarbstoff enthalten, durch radikalische Suspensionspolymerisation von ethylenisch ungesättigten Monomeren in einer Öl-in-Wasser-Emulsion, deren disperse Phase mindestens einen Fluoreszenzfarbstoff in mindestens einem ethylenisch ungesättigten Monomer gelöst enthält und einen mittleren Teilchendurchmesser von mindestens 1 $\mu$m aufweist, in Gegenwart mindestens einer oberflächenaktiven Verbindung, wobei man die Suspensionspolymerisation in Gegenwart von zusätzlich mindestens 0,5 Gew.-%, bezogen auf die Monomeren, mindestens einer hydrophoben, nichtpolymerisierbaren, organischen Verbindung, wobei man als hydrophobe, nichtpolymerisierbare organische Verbindung aliphatische Kohlenwasserstoffe mit 10 bis 50 C-Atomen, Alkohole mit 10 bis 24 C-Atomen, Tetraalkylsilane, Olivenöl, Perfluormethyldekalin und/oder Di-n-butylester von $C_4$- bis $C_6$-Dicarbonsäuren einsetzt, eines hydrophoben Polymeren aus mindestens einem $C_2$-bis $C_6$-Olefin mit einer Molmasse $M_w$ bis zu 10 000, eines Siloxans mit einer Molmasse $M_w$ bis zu 5 000 und/oder Polystyrol mit einer Molmasse $M_w$ bis zu 10 000 durchführt, wobei "hydrophob" eine Löslichkeit in Wasser von kleiner 0,01 g/l (bei 25 °C und 1013 mbar) bedeutet.

Die Suspensionspolymerisation wird beispielsweise in Gegenwart von 0,5 bis 50 Gew.-%, bevorzugt in Gegenwart von 1 bis 20 Gew.-%, bezogen auf die Monomeren, einer hydrophoben, nichtpolymerisierbaren, organischen Verbindung, eines hydrophoben Polymeren aus mindestens einem $C_2$-bis $C_6$-Olefin, eines Siloxans mit einer Molmasse $M_w$ bis zu 5 000 und/oder eines Polystyrols mit einer Molmasse $M_w$ bis zu 10 000 durchgeführt. Die Suspensionspolymerisation wird vorzugsweise in Gegenwart von 0,5 bis 50 Gew.-% Hexadekan und/oder Weißöl, besonders bevorzugt in Gegenwart von 2 bis 20 Gew.-% Hexadekan und/oder Weißöl, durchgeführt.

Der Restmonomerengehalt der so hergestellten erfindungsgemäßen Dispersionen kann durch eine chemische Desodorierung wie beispielsweise von P. H. H. Araújo, C. Sayer, J. G. R. Poco, R. Giudici, in Polymer Engineering and Science, 2002 (42), 1442-1468 beschrieben oder in EP 1 375 530 B1 offenbart, reduziert werden.

Der Feststoffgehalt der wässrigen Dispersionen beträgt beispielsweise 10 bis 60 Gew.-%, vorzugsweise 20 bis 45 Gew.-% und liegt meistens in dem Bereich von 30 bis 45 Gew.-%.

Die dispergierten Polymerteilchen enthalten das Hydrophob und mindestens einen Fluoreszenzfarbstoff. Sie haben eine mittlere Teilchengröße von beispielsweise 1 bis 100 $\mu$m, vorzugsweise 1,1 bis 25 $\mu$m und meistens 1,1 bis 4 $\mu$m und enthalten mindestens einen Fluoreszenzfarbstoff in einer Menge von beispielsweise 0,001 bis 10 Gew.-%, meistens von 0,01 bis 1,0 Gew.-%. Die hier angegebenen Teilchengrößen des feinteiligen Polymerisats sind gewichtsmittlere Teilchengrößen, wie sie durch Lichtstreuung ermittelt werden können. Verfahren hierzu sind dem Fachmann geläufig, beispielsweise aus H. Wiese in D. Distler, Wässrige Polymerdispersionen, Wiley-VCH 1999, Kapitel 4.2.1, S. 40ff und dort zitierte Literatur sowie H. Auweter, D. Horn, J. Colloid Interf. Sci. 105 (1985) 399, D. Lilge, D. Horn, Colloid Polym. Sci. 269 (1991) 704 oder H. Wiese, D. Horn, J. Chem. Phys. 94 (1991) 6429.

Die dispergierten Teilchen weisen eine einheitliche Teilchengrößenverteilung auf. Die Einheitlichkeit kann beispielsweise charakterisiert werden durch die sogenannte Uniformität $\dfrac{\sum X_i \, |\, d(v,0.5) - d_i\,|}{d(v,0.5)\sum X_i}$, wobei $d_i$ der mittlere Durchmesser der Größenklasse $i$ ist, $X_i$ den gemessenen Beitrag dieser Größenklasse zur Größenverteilung bezeichnet, $d(v,0.5)$ für den volumengemittelten Median steht, und die Summe jeweils über alle Größenklassen i läuft (Mastersizer Reference Manual, Malvern Instruments Ltd., Spring Lane South, Malvern, Worcs. WR14 1AT, U.K.). Da die so definierte Uniformität Abweichungen vom Volumenmittel aufsummiert, bedeuten niedrige Werte eine größere Einheitlichkeit. Die erfindungsgemäß hergestellten Teilchen weisen in Streulichtmessungen mit Auswertung nach der Mie-Theorie eine Uniformität unterhalb von 1,0 auf.

Durch Trocknen der wässrigen Dispersionen von Polymeren, die erhältlich sind durch radikalische Suspensionspolymerisation von ethylenisch ungesättigten Monomeren in einer Öl-in-Wasser-Emulsion, deren disperse Phase mindestens einen Fluoreszenzfarbstoff in mindestens einem ethylenisch ungesättigten Monomer gelöst enthält und einen mittleren Teilchendurchmesser von mindestens 1 $\mu$m aufweist, in Gegenwart mindestens einer oberflächenaktiven Verbindung und zusätzlich mindestens 0,5 Gew.-%, bezogen auf die Monomeren, mindestens einer hydrophoben, nichtpolymerisierbaren, organischen Verbindung, wobei man als hydrophobe, nichtpolymerisierbare organische Verbindung aliphatische Kohlenwasserstoffe mit 10 bis 50 C-Atomen, Alkohole mit 10 bis 24 C-Atomen, Tetraalkylsilane, Olivenöl, Perfluormethyldekalin und/oder Di-n-butylester von $C_4$- bis $C_6$-Dicarbonsäuren einsetzt, eines hydrophoben Polymeren aus mindestens einem $C_2$-bis $C_6$-Olefin mit einer Molmasse $M_w$ bis zu 10 000, eines Siloxans mit einer Molmasse $M_w$ bis zu 5 000 und/oder Polystyrol mit einer Molmasse $M_w$ bis zu 10 000, wobei "hydrophob" eine Löslichkeit in Wasser von kleiner 0,01 g/l (bei 25 °C und 1013 mbar) bedeutet, erhält man Polymerteilchen, die einen mittleren Teilchendurchmesser von mindestens 1 $\mu$m haben und die mindestens einen Fluoreszenzfarbstoff enthalten, in Form eines Pulvers. Beispiele für Trocknungsmethoden sind die Sprühtrocknung und die Gefriertrocknung. Die einzelnen Teilchen liegen in den Pulvern meistens als Aggregate mehrerer Einzelteilchen vor. Sie können beispielsweise einer Trocken- oder Nassvermahlung unterworfen werden. Man kann z. B. die Aggregate von Einzelteilchen zu Teilchen mit einer mittleren Teilchengröße von 1 bis 100 $\mu$m vermahlen. Bei einem Mahlvorgang können jedoch auch einzelne Teilchen mit einem mittleren Teilchendurchmesser von 10 bis 1000 nm, meistens 200 bis 1000 nm, entstehen. Diese Teilchengrößen liegen dann in einem Bereich, der für Polymerteilchen charakteristisch ist, die durch Miniemulsionspolymerisation hergestellt werden, z. B. nach dem aus der WO-A-99/40123 bekannten Verfahren.

Gegenstand der Erfindung ist außerdem die Verwendung von wässrigen Dispersionen von Polymeren, die erhältlich sind durch radikalische Suspensionspolymerisation von ethylenisch ungesättigten Monomeren in einer Öl-in-Wasser-Emulsion, deren disperse Phase mindestens einen Fluoreszenzfarbstoff in mindestens einem ethylenisch ungesättigten Monomer gelöst enthält und einen mittleren Teilchendurchmesser von mindestens 1 $\mu$m aufweist, in Gegenwart mindestens einer oberflächenaktiven Verbindung und zusätzlich mindestens 0,5 Gew.-%, bezogen auf die Monomeren, mindestens einer hydrophoben, nichtpolymerisierbaren, organischen Verbindung, wobei man als hydrophobe, nichtpolymerisierbare organische Verbindung aliphatische Kohlenwasserstoffe mit 10 bis 50 C-Atomen, Alkohole mit 10 bis 24 C-Atomen, Tetraalkylsilane, Olivenöl, Perfluormethyldekalin und/oder Di-n-butylester von $C_4$- bis $C_6$-Dicarbonsäuren einsetzt, eines hydrophoben Polymeren aus mindestens einem $C_2$-bis $C_6$-Olefin mit einer Molmasse $M_w$ bis zu 10 000, eines Siloxans mit einer Molmasse $M_w$ bis zu 5 000 und/oder Polystyrol mit einer Molmasse $M_w$ bis zu 10 000, sowie der aus diesen Polymerdispersionen jeweils durch Trocknen erhältlichen mindestens einen Fluoreszenzfarbstoff enthaltenden Pulver zum Markieren von Materialien, wobei " hydrophob" eine Löslichkeit in Wasser von kleiner 0,01 g/l (bei 25 °C und 1013 mbar) bedeutet.

Vorzugsweise werden die durch Suspensionspolymerisation herstellbaren wässrigen Dispersionen von Polymeren, die mindestens einen Fluoreszenzfarbstoff und ein Hydrophob enthalten und eine mittlere Teilchengröße der dispergierten Teilchen von 1 $\mu$m bis 100 $\mu$m, insbesondere von 1,1 bis 25 $\mu$m aufweisen, zum Markieren von Materialien verwendet.

Die erfindungsgemäßen wässrigen Dispersionen, die jeweils mindestens einen Fluoreszenzfarbstoff und ein Hydrophob enthalten, sowie die aus den Dispersionen durch beispielsweise Sprühtrocknung herstellbaren Polymerpulver werden beispielweise zum Markieren von Textilien, Papier, Papierprodukten, Lacken, Einsatzstoffen für die Bauindustrie, Klebstoffen, Kraftstoffen, Kunststofffolien, Papierstreichmassen, Papierleimungsmitteln, flüssigen Formulierungen für den Pflanzenschutz, pharmazeutischen und kosmetischen Formulierungen, Druckfarben zum Bedrucken von Verpackungen, Papier und Datenträgern verwendet. Von besonderer praktischer Bedeutung ist die Verwendung der erfindungsgemäßen wässrigen Dispersionen, die jeweils mindestens einen Fluoreszenzfarbstoff und ein Hydrophob enthalten, sowie die aus den Dispersionen durch beispielsweise Sprühtrocknung herstellbaren Polymerpulver zur Markierung von Verpackungen aller Art. Die Anwendung kann dabei beispielsweise direkt z. B. durch Sprühen einer Polymerdispersion oder zusammen mit einer Druckfarbe erfolgen. Bei den Verpackungen kann es sich beispielsweise um Papier, Pappe, Karton, Kunststofffolien wie Folien aus Polyethylen, Polypropylen, Polyester oder Polyamid, oder um Verbundmaterialien handeln, z. B. Verbunde aus Papier und mindestens einer Kunststofffolie, Verbunde aus einer Metallfolie und mindestens einer Kunststofffolie wie Blisterfolien für die Verpackung von Tabletten, oder Verbunde aus mindestens zwei verschiedenen Kunststofffolien. Die Kunststofffolien können gegebenenfalls mit einer Dispersion, z. B. Polyvinylidenchlorid-Dispersion, ein- oder beidseitig beschichtet sein. Bei diesen Verbunden wird - wie bereits oben ausgeführt - entweder Papier oder ein Papierprodukt bzw. eine Kunststofffolie mit einer erfindungsgemäß zu verwendenden Dispersion, die jeweils mindestens einen Fluoreszenzfarbstoff und ein Hydrophob enthält, oder den aus den Dispersionen jeweils erhältlichen Polymerpulvern markiert.

Die mindestens einen Fluoreszenzfarbstoff enthaltenden wässrigen Dispersionen werden vorzugsweise zum Markieren von Papier, Papierprodukten, Lacken, Klebstoffen, Papierstreichmassen, Papierleimungsmitteln und flüssigen Formulierungen für den Pflanzenschutz verwendet. Sie werden dabei z. B. den zu markierenden Stoffen in einer Menge zugesetzt, die in den meisten Fällen so bemessen ist, dass die Markierung in oder auf den Materialien mit bloßem Auge nicht oder praktisch nicht zu erkennen ist. Die Erkennung der Markierung erfolgt beispielsweise mit Hilfe der Laser-Rastermikroskopie, mit Hilfe eines Fluoreszenzmikroskops oder mit Hilfe eines Fluoreszenzspektrometers. Der Feststoffgehalt der wässrigen Dispersionen beträgt üblicherweise 1 bis 70 Gew.-%, vorzugsweise 10 bis 50 Gew.-%. Diese Dispersionen können direkt oder nach Verdünnung mit einem Dispersionsmedium, vorzugsweise Wasser, zum Markieren von Materialien verwendet werden.

Um Materialien zu markieren, verwendet man die mindestens einen Fluoreszenzfarbstoff enthaltenden wässrigen Polymerdispersionen oder die daraus gewonnenen Pulver mindestens in solchen Mengen, dass die Fluoreszenzfarbstoffe in den markierten Materialien nachweisbar sind. Beispielsweise verwendet man für die Markierung von Papier, Papierstreichmassen, Leimungsmitteln, Klebstoffen, Zementverflüssigern, Grundierungen im Bausektor und Lacken, 0,01 bis 25 Gew.-%, vorzugsweise 0,1 bis 5 Gew.-%, mindestens eines Typs polymerer Dispersionspartikeln, die mindestens einen Fluoreszenzfarbstoff enthalten. Beispielsweise werden die erfindungsgemäß markierten Papierstreichmassen mit Hilfe eines Streichaggregates auf Rohpapier in einer Menge von z. B. 11 g/m$^2$ aufgetragen und das gestrichene Papier getrocknet.

Dabei enthalten die Papierstreichmassen neben den erfindungsgemäßen wässrigen Dispersionen, die mindestens einen Fluoreszenzfarbstoff enthalten, die für Papierstreichmassen üblichen Bestandteile wie Pigmente, Dispergiermittel, Verdicker und Binder. Bei den Bindern handelt es sich üblicherweise um Emulsionspolymerisate, die vorzugsweise zu mindestens 40 Gew.-%, bevorzugt zu mindestens 60 Gew.-%, besonders bevorzugt zu mindestens 80 Gew.-% aus sogenannten Hauptmonomeren bestehen.

Bevorzugte Hauptmonomere sind $C_1$-$C_{10}$-Alkyl(meth)acrylate und Mischungen der Alkyl(meth)acrylate mit Vinylaromaten, insbesondere Styrol (zusammenfassend auch als Polyacrylat-Bindemittel bezeichnet) oder Kohlenwasserstoffe mit 2 Doppelbindungen, insbesondere Butadien, oder Gemische von derartigen Kohlenwasserstoffen mit Vinylaromaten, insbesondere Styrol (zusammenfassend auch als Polybutadien-Bindemittel bezeichnet).

Bei Polybutadien-Bindemitteln kann das Gewichtsverhältnis von Butadien zu Vinylaromaten (insbesondere Styrol) z. B. 10:90 bis 90:10, vorzugsweise 20:80 bis 80:20 betragen.

Neben den Hauptmonomeren kann das Polymer weitere Monomere enthalten, z. B. Monomere mit Carbonsäure, Sulfonsäure oder Phosphonsäuregruppen. Bevorzugt sind Carbonsäuregruppen. Genannt seien z. B. Acrylsäure, Methacrylsäure, Itaconsäure, Maleinsäure oder Fumarsäure und Aconitsäure. Der Gehalt an ethylenisch ungesättigten Säuren im Emulsionspolymerisat ist im allgemeinen kleiner 5 Gew.-%.

Weitere Monomere sind z. B. auch Hydroxylgruppen enthaltende Monomere, insbesondere $C_1$-$C_{10}$-Hydroxyalkyl(meth)acrylate, oder Amide wie (Meth)acrylamid.

Derartige Binder sind beispielsweise unter den Handelsnamen Styronal® und Acronal® (beide von BASF Aktiengesellschaft) erhältlich.

Erfindungsgemäß werden zunächst diese Binder mit den erfindungsgemäßen wässrigen Dispersionen, die mindestens einen Fluoreszenzfarbstoff enthalten, vermischt. Die so erhaltenen Bindemittel werden dann zur Herstellung einer Papierstreichmasse eingesetzt.

Gegenstand der vorliegenden Erfindung sind daher auch Bindemittel, die einen Binder und erfindungsgemäße wässrige Dispersionen enthaltend mindestens einen Fluoreszenzfarbstoff enthalten.

Weiterhin ist ein Gegenstand der vorliegenden Erfindung auch eine Papierstreichmasse, die ein solches Bindemittel enthält.

Papier kann auch dadurch markiert werden, dass man bei der Papierherstellung ein Papierleimungsmittel einsetzt, das eine mindestens einen Fluoreszenzfarbstoff enthaltende wässrige Polymerdispersion enthält. Geeignete Masseleimungsmittel für Papier sind beispielsweise wässrige Polymerdispersionen, wässrige Emulsionen von Alkyldiketenen oder Alkenylbernsteinsäureanhydriden oder Harzleim. Auch Oberflächenleimungsmittel für Papier können eine mindestens einen Fluoreszenzfarbstoff enthaltende wässrige Polymerdispersion enthalten und damit selbst markiert und außerdem für die Markierung von Papier und Papierprodukten verwendet werden.

Gegenstand der vorliegenden Erfindung sind daher auch Papierleimungsmittel, die erfindungsgemäße wässrige Dispersionen enthaltend mindestens einen Fluoreszenzfarbstoff enthalten.

Um Papier und Papierprodukte zu markieren, ist es selbstverständlich auch möglich, eine mindestens einen Fluoreszenzfarbstoff enthaltende wässrige Polymerdispersion oder daraus gewonnene Pulver direkt auf die Oberfläche von Papier oder Papierprodukten, wie Pappe oder Karton, aufzubringen. Der Auftrag der mindestens einen Fluoreszenzfarbstoff enthaltenden wässrigen Polymerdispersion auf ein Papierprodukt kann beispielsweise mit Hilfe einer Leimpresse oder mit Hilfe einer Sprühvorrichtung erfolgen. Ebenso ist es möglich, die für die Markierung erforderliche wässrige Dispersion nur auf Teile eines Papierprodukts zu sprühen oder zu drucken, um das Produkt partiell zu markieren, beispielsweise als Strichkodierung. Solche Markierungen sind insbesondere für Verpackungsmaterialien von Interesse. Die Polymerteilchen, die einen Fluoreszenzfarbstoff enthalten, können z. B. mittels konfokaler Laser-Rastermikroskopie lokalisiert und durch Fluoreszenzspektroskopie eindeutig auf den markierten Materialien identifiziert werden.

Für die Markierung von Kraftstoffen, insbesondere von Heizöl, verwendet man die wässrigen Dispersionen von Polymeren, die mindestens einen Fluoreszenzfarbstoff enthalten, oder die daraus durch Sprühtrocknung erhältlichen Pulver z. B. in einer Menge von beispielsweise 0,00001 bis 1 Gew.-%, vorzugsweise 0,0001 bis 0,1 Gew.-%, bezogen auf Kraftstoff, wobei sich die Angaben für die Dispersionen auf den Feststoffgehalt der Dispersion beziehen. Für die Markierung von flüssigen Formulierungen für den Pflanzenschutz, pharmazeutischen und kosmetischen Formulierungen verwendet man die Polymerteilchen der mindestens einen Fluoreszenzfarbstoff enthaltenden wässrigen Polymerdispersionen oder die daraus durch Sprühtrocknung erhältlichen Pulver beispielsweise in Mengen von 0,00001 bis 1 Gew.-%, vorzugsweise 0,0001 bis 0,2 Gew.-%, meistens 0,0001 bis 0,1 Gew.-%. Bei den flüssigen Formulierungen für den Pflanzenschutz handelt es sich üblicherweise um wässrige Formulierungen wie Emulsionen oder Dispersionen von beispielsweise Pestiziden, Herbiziden oder Fungiziden.

Die mindestens einen Fluoreszenzfarbstoff enthaltenden Polymerteilchen, die erfindungsgemäß zum Markieren von Materialien verwendet werden, sind lichtecht. Sie sind darüber hinaus migrationsstabil, d.h. sie bluten nicht aus.

Beispiele

Beispiel 1

In einem 2 l-Kessel, der mit Dispenserrührer (Durchmesser 5 cm) ausgestattet war, wurde folgendes Gemisch vorgelegt:

| | |
|---|---|
| 450 g | Wasser |
| 250 g | Polyvinylalkohol (Mowiol® 40 / 88 (10% in Wasser) |
| 52,5 mg | $NaNO_2$ |
| 30 g | Allylmethacrylat |
| 270 g | Methylmethacrylat |
| 0,06 g | Gelber Fluoreszenzfarbstoff - Gelb 083 (Lumogen® F) |
| 15 g | Hexadekan |

Die Mischung wurde 30 min bei Raumtemperatur mit einer Drehzahl von 5000 UpM dispergiert und dann in einen mit einem Ankerrührer ausgestatteten 2 l-Kessel umgefüllt. Es wurden 1,575 g tert-Butylperpivalat zugegeben und der Kessel innerhalb von 1 Stunde auf 60 °C aufgeheizt. Der Kesselinhalt wurde anschließend über 2 Stunden auf 70 °C erwärmt, danach in 30 min auf 85 °C und bei dieser Temperatur für 1 Stunde gehalten. Es wurden 7 g einer 10%igen wässrigen Lösung von tert-Butylhydroperoxid zugegeben und eine Lösung von 0,4 g Ascorbinsäure in 20 g Wasser über eine Stunde zudosiert. Der Kessel wurde anschließend auf Raumtemperatur abgekühlt.

Man erhielt eine Dispersion vernetzter, mit einem Fluoreszenzfarbstoff gefärbter Teilchen mit einem volumengemittelten Teilchendurchmesser von 2,0 μm und einer engen Teilchengrößenverteilung mit einer Uniformität von 0,5, bestimmt mittels Lichtstreuanalyse nach der Mie-Theorie (Malvern Mastersizer), wobei für die Teilchen ein Brechungsindex von 1,49 und ein Absorptionsindex von 0 zugrundegelegt wurde. Der Feststoffgehalt betrug 30,85 Gew.-%.

Beispiel 2

In einem 2 l-Kessel, der mit einem Dispenserrührer (Durchmesser 5 cm) ausgerüstet war, wurde folgendes Gemisch vorgelegt:

| | |
|---|---|
| 441,45 g | Wasser |
| 45 g | Polyvinylalkohol (Mowiol® 15 / 79 (10% in Wasser) |
| 180 g | Culminal® MHPC 100 (5% in Wasser) Methylhydroxypropylcellulose |
| 52,5 mg | $NaNO_2$ |
| 30 g | Butandioldiacrylat |
| 270 g | Methylmethacrylat |
| 0,06 g | Gelber Fluoreszenzfarbsstoff-Gelb 083 (Lumogen® F) |
| 15 g | Hexadekan |

Das Emulgieren der Mischung und die Polymerisation der Monomeren erfolgte wie in Beispiel 1 beschrieben. Man erhielt eine Dispersion vernetzter, mit Fluoreszenzfarbstoff gefärbter Teilchen mit einem mittleren Teilchendurchmesser von 2,6 μm und einer engen Teilchengrößenverteilung mit einer Uniformität von 0,5. Der Feststoffgehalt der Dispersion betrug 29,6 Gew.-%.

Beispiel 3

In einem 2 l-Kessel, der mit einem Dispenserrührer (Durchmesser 5 cm) ausgerüstet war, wurde folgendes Gemisch vorgelegt:

| | |
|---|---|
| 450 g | Wasser |
| 250 g | Mowiol® 40 / 88 (10% in Wasser) teilhydrolysierter Polyvinylalkohol |
| 52,5 mg | $NaNO_2$ |
| 15 g | Allylmethacrylat |
| 285 g | Methylmethacrylat |
| 0,1 g | Gelber Fluoreszenzfarbstoff - (Lumogen® F Gelb 083) |
| 0,1 g | Orangefarbener Fluoreszenzfarbstoff (Lumogen® F - Orange 240) |
| 0,1 g | Roter Fluoreszenzfarbstoff (Lumogen® F - Rot 300) |
| 15 g | Hexadekan |

Das Emulgieren der Mischung und die Polymerisation der Monomeren erfolgte wie in Beispiel 1 beschrieben. Man erhielt eine Dispersion vernetzter, mit 3 Fluoreszenzfarbstoffen gefärbter Teilchen mit einem mittleren Teilchendurchmesser von 1,8 μm und einer engen Teilchengrößenverteilung mit einer Uniformität von 0,4. Der Feststoffgehalt der Dispersion betrug 31,5 Gew.-%.

Beispiel 4

In einem 2 l-Kessel, der mit einem Dispenserrührer (Durchmesser 5 cm) ausgestattet war, wurde folgendes Gemisch vorgelegt:

| | |
|---|---|
| 450 g | Wasser |
| 250 g | Polyvinylalkohol [Mowiol® 40 / 88 (10% in Wasser)] |
| 52,5 mg | $NaNO_2$ |
| 30 g | Allylmethacrylat |
| 270 g | Methylmethacrylat |
| 0,06 g | Gelber Fluoreszenzfarbstoff (Lumogen® F - Gelb 083) |
| 0,3 g | Roter Fluoreszenzfarbstoff (Lumogen® F - Rot 300) |
| 15 g | Hexadekan |

Das Emulgieren der Mischung und die Polymerisation der Monomeren erfolgte wie in Beispiel 1 beschrieben. Man erhielt eine Dispersion vernetzter, mit 2 Fluoreszenzfarbstoffen gefärbter Teilchen mit einem volumengemittelten Teilchendurchmesser von 1,8 μm und einer engen Teilchengrößenverteilung mit einer Uniformität von 0,5. Der Feststoffgehalt der Dispersion betrug 31 Gew.-%.

Beispiel 5

In einen 2 l-Kessel mit Dispenserrührer (Durchmesser 5 cm) wurde folgendes Gemisch gegeben:

| | |
|---|---|
| 450 g | Wasser |
| 250 g | Polyvinylalkohol [Mowiol® 40 / 88 (10 % in Wasser)] |
| 2,1 g | $NaNO_2$ (2,5 % in Wasser) |
| 30 g | Butandioldiacrylat |
| 270 g | Methylmethacrylat |
| 0,09 g | Roter Fluoreszenzfarbstoff (Lumogen® F - Rot 305) |
| 15 g | Hexadekan |

Das Emulgieren der Mischung und die Polymerisation der Monomeren erfolgte wie in Beispiel 1 beschrieben.
Man erhielt eine Dispersion vernetzter, mit Fluoreszenzfarbstoff gefärbter Teilchen mit einem mittleren Teilchendurchmesser von 2,4 μm und einer Uniformität von 0,5. Es wurden 10 g Koagulat gefunden. Nach einer physikalischen Desodorierung betrug der Feststoffgehalt der Dispersion 33,4 Gew.-%.

Beispiel 6

In einen 2 l-Kessel mit Dispenserrührer (Durchmesser 5 cm) wurde folgendes Gemisch gegeben:

| | |
|---|---|
| 450 g | Wasser |
| 250 g | Polyvinylalkohol [Mowiol® 40 / 88 (10 % in Wasser)] |
| 52,5 g | $NaNO_2$ (2,5 % in Wasser) |
| 30 g | Allylmethacrylat |
| 270 g | Methylmethacrylat |
| 0,03 g | Gelber Fluoreszenzfarbstoff (Lumogen® - Gelb 083) |
| 0,06 g | Orangefarbener Fluoreszenzfarbstoff (Lumogen® - Orange 240) |
| 0,09 g | Roter Fluoreszenzfarbstoff (Lumogen® F - Rot) |
| 15 g | Hexadekan |

Die Mischung wurde 60 min bei Raumtemperatur mit einer Drehzahl von 6 500 Upm dispergiert und dann in einen mit einem Ankerrührer ausgestatteten 2 l-Kessel umgefüllt. Es wurde 1,575 g tert-Butylperpivalat zugegeben und der Kessel innerhalb von 1 Stunde auf 65 °C aufgeheizt. Anschließend wurde über 2 Stunden auf 70 °C erwärmt, danach in 30 min auf 85 °C und bei dieser Temperatur für 1 Stunde gehalten. Es wurden 7 g einer 10 % wässrigen Lösung von tert-Butylhydroperoxid zugegeben und eine Lösung von 0,4 g Ascorbinsäure in 20 g Wasser über eine Stunde zudosiert. Der Kessel wurde anschließend auf Raumtemperatur abgekühlt.

Man erhielt eine Dispersion vernetzter, Fluoreszenzfarbstoff-gefärbter Teilchen mit einem mittleren Teilchendurchmesser von 1,91 $\mu$m und einer Uniformität von 0,5. Der Feststoffgehalt der Dispersion betrug 31,7 Gew.-%.

Beispiel 7

In einen 2 l-Kessel mit Dispenserrührer (Durchmesser 5 cm) wurde folgendes Gemisch gegeben:

| | |
|---|---|
| 502,7 g | Wasser |
| 30 g | Polyvinylalkohol [Mowiol® 15 / 79 (10 % in Wasser)] |
| 120 g | Culminal® MHPC 100 (5 % in Wasser) Methylhydroxypropylcellulose |
| 52,5 mg | $NaNO_2$ |
| 120 g | Butandioldiacrylat |
| 150 g | Methylmethacrylat |
| 30 g | Methacrylsäure |
| 0,06 g | Gelber Fluoreszenzfarbstoff (Lumogen® F - Gelb 083) |
| 0,015 g | Hydrochinonmonomethylether |
| 15 g | Hexadekan |

Das Emulgieren der Mischung und die Polymerisation der Monomeren erfolgte wie in Beispiel 1 beschrieben.

Man erhielt eine Dispersion vernetzter, mit Fluoreszenzfarbstoff gefärbter Teilchen mit einem mittleren Teilchendurchmesser von 4,9 $\mu$m. Der Feststoffgehalt der Dispersion betrug 30,3 Gew.-%

Beispiel 8

In einen 2 l-Kessel mit Dispenserrührer (Durchmesser 5 cm) wurde folgendes Gemisch gegeben:

| | |
|---|---|
| 450 g | Wasser |
| 250 g | Polyvinylalkohol [Mowiol® 40 / 88 (10 % in Wasser)] |
| 2,1 g | $NaNO_2$ (2,5 % in Wasser) |
| 30 g | Allylmethacrylat |
| 240 g | Methylmethacrylat |
| 30 g | n-Butylacrylat |
| 0,09 g | Roter Fluoreszenzfarbstoff (Lumogen® F - Rot 305) |
| 15 g | Hexadekan |

Das Emulgieren der Mischung und die Polymerisation der Monomeren erfolgte wie im Beispiel 1 beschrieben.

Man erhielt eine Dispersion vernetzter, mit Fluoreszenzfarbstoff gefärbter Teilchen mit einem mittleren Teilchendurchmesser von 2,1 μm und einer Uniformität von 0,4. Es wurden 6 g Koagulat gefunden, der Feststoffgehalt der Dispersion betrug 29,9 Gew.-%.

Beispiel 9

In einen 2 I-Kessel mit Dispenserrührer (Durchmesser 5 cm) wurde folgendes Gemisch gegeben:

| | |
|---|---|
| 370,1 g | Wasser |
| 208,3 g | Polyvinylalkohol [Mowiol® 40 / 88 (10 % in Wasser)] |
| 1,75 g | NaNO$_2$ (2,5 % in Wasser) |
| 25 g | Butandioldiacrylat |
| 225 g | Methylmethacrylat |
| 0,75 g | Ethylhexylthioglycolat |
| 0,08 g | Roter Fluoreszenzfarbstoff (Lumogen® F - Rot 305) |
| 12,5 g | Hexadekan |

Das Emulgieren der Mischung und die Polymerisation der Monomeren erfolgte wie in Beispiel 1 beschrieben.

Man erhielt eine Dispersion vernetzter, mit Fluoreszenzfarbstoff gefärbter Teilchen mit einem mittleren Teilchendurchmesser von 1,6 μm und einer Uniformität von 0,4, der Feststoffgehalt der Dispersion betrug 28,3 Gew.-%.

Beispiel 10

In einen 2 I-Kessel mit Dispenserrührer (Durchmesser 5 cm) wurde folgendes Gemisch gegeben:

| | |
|---|---|
| 450 g | Wasser |
| 250 g | Polyvinylalkohol [Mowiol® 40 / 88 (10 % in Wasser)] |
| 2,11 g | NaNO$_2$ (2,5 % in Wasser) |
| 1,35 g | Butandioldiacrylat |
| 298,65 g | Methylmethacrylat |
| 0,09 g | Roter Fluoreszenzfarbstoff (Lumogen® F - Rot 305) |
| 15 g | Hexadekan |

Das Emulgieren der Mischung und die Polymerisation der Monomeren erfolgte wie in Beispiel 1 beschrieben.

Man erhielt eine Dispersion vernetzter, mit Fluoreszenzfarbstoff gefärbter Teilchen mit einem mittleren Teilchendurchmesser von 1,9 μm und einer Uniformität von 0,5, der Feststoffgehalt der Dispersion betrug 31,4 Gew.-%.

Beispiel 11

In einen 2 I-Kessel mit Dispenserrührer (Durchmesser 5 cm) wurde folgendes Gemisch gegeben:

| | |
|---|---|
| 450 g | Wasser |
| 250 g | Polyvinylalkohol [Mowiol® 40 / 88 (10 % in Wasser)] |
| 2,1 g | NaNO$_2$ (2,5 % in Wasser) |
| 300 g | Methylmethacrylat |
| 0,09 g | Roter Fluoreszenzfarbstoff (Lumogen® F - Rot 305) |
| 15 g | Hexadekan |

Das Emulgieren der Mischung und die Polymerisation der Monomeren erfolgte wie in Beispiel 1 beschrieben, wobei die Gesamtmenge an tert.-Butylperpivalat in drei gleiche Teile geteilt wurde. Der erste Teil wurde bei 60 °C zugegeben, der zweite Teil bei 65 °C, der dritte bei 70 °C.

Man erhielt eine Dispersion unvernetzter, mit Fluoreszenzfarbstoff gefärbter Teilchen mit einem mittleren Teilchendurchmesser von 1,5 μm und einer Uniformität von 0,4, der Feststoffgehalt der Dispersion betrug 31,3 Gew.-%.

Beispiel 12

In einen 2 l-Kessel mit Dispenserrührer (Durchmesser 5 cm) wurde folgendes Gemisch gegeben:

| | |
|---|---|
| 450 g | Wasser |
| 250 g | Polyvinylalkohol [Mowiol® 40 / 88 (10% in Wasser)] |
| 2,1 mg | NaNO$_2$ |
| 30 g | 1,4-Butandioldiacrylat |
| 270 g | Methylmethacrylat |
| 0,09 g | Roter Fluoreszenzfarbstoff (Lumogen® F - Rot) |
| 15 g | Weißöl (CAS-Nr. 8042-47-5) |

Die Mischung wurde 30 min bei Raumtemperatur mit einer Drehzahl von 5000 UpM dispergiert und dann in einen mit einem Ankerrührer ausgestatteten 2 l-Kessel umgefüllt. Es wurden 2,11 g tert-Butylperpivalat zugegeben und der Kessel innerhalb von 1 Stunde auf 60 °C aufgeheizt. Der Kesselinhalt wurde anschließend über 2 Stunden auf 70 °C erwärmt, danach in 30 Minuten auf 85 °C erhöht und bei dieser Temperatur 1 Stunde gehalten. Es wurden 7 g einer 10%igen wässrigen Lösung von tert-Butylhydroperoxid zugegeben und eine Lösung von 0,4 g Ascorbinsäure in 20 g Wasser über eine Stunde zudosiert. Der Kessel wurde anschließend auf Raumtemperatur abgekühlt.

Es wurde eine Dispersion vernetzter, mit Fluoreszenzfarbstoff gefärbter Teilchen mit einem mittleren Teilchen-Durchmesser von 1,2 μm und einer breiten Teilchengrößenverteilung erhalten. Der Feststoffgehalt der Dispersion betrug 27,6 Gew.-%.

Beispiel 13

In einen 2 l-Kessel mit Dispenserrührer (Durchmesser 5 cm) wurde folgendes Gemisch gegeben:

| | |
|---|---|
| 450 g | Wasser |
| 250 g | Polyvinylalkohol [Mowiol® 44 / 88 (10% in Wasser)] |
| 2,1 mg | NaNO$_2$ |
| 24 g | 1,4-Butandioldiacrylat |
| 216 g | Methylmethacrylat |
| 0,09 g | Roter Fluoreszenzfarbstoff (Lumogen® F - Rot) |
| 60 g | Hexadekan |

Das Emulgieren der Mischung und die Polymerisation der Monomeren erfolgte wie in Beispiel 12 beschrieben.

Es wurde eine Dispersion vernetzter, mit Fluoreszenzfarbstoff gefärbter Teilchen mit einem mittleren Teilchen-Durchmesser von 1,2 μm und einer breiten Teilchengrößenverteilung erhalten. Der Feststoffgehalt der Dispersion betrug 29,0 Gew.-%.

Beispiel 14

In einen 2 l-Kessel mit Dispenserrührer (Durchmesser 5 cm) wurde folgendes Gemisch gegeben:

| | |
|---|---|
| 450 g | Wasser |
| 250 g | Polyvinylalkohol [Mowiol® 26 / 88 (10% in Wasser)] |
| 2,1 mg | NaNO$_2$ |
| 30 g | 1,4-Butandioldiacrylat |
| 270 g | Methylmethacrylat |
| 0,09 g | Roter Fluoreszenzfarbstoff (Lumogen® F - Rot) |
| 15 g | Hexadekan |

Das Emulgieren der Mischung und die Polymerisation der Monomeren erfolgte wie in Beispiel 12 beschrieben.

Es wurde eine Dispersion vernetzter, mit Fluoreszenzfarbstoff gefärbter Teilchen mit einem mittleren Teilchen-Durchmesser von 1,2 μm und einer engen Teilchengrößenverteilung erhalten. Der Feststoffgehalt der Dispersion betrug 29,0 Gew.-%.

Anwendungsbeispiele

Formulierung von Papierstreichfarben

In einem 11 großen Behältnis ausgestattet mit Rührer wurden die in der folgenden Tabelle angegebenen Streichfarben angesetzt. Der pH-Wert lag bei ca. 9 und es wurde auf eine Viskosität von 1000 mPas eingestellt.

Tabelle

| Zusammensetzung | (1) | (2) | (3) | (4) | (5) | (6) | (7) |
|---|---|---|---|---|---|---|---|
| $CaCO_3$-Pigment (Hydrocarb 90) | 100,0 | 70,0 | 70,0 | 70,0 | 70,0 | 70,0 | 70,0 |
| Clay-Pigment (Amazon 88) | 97,0 | 30,0 | 30,0 | 30,0 | 30,0 | 30,0 | 30,0 |
| Dispergierhilfsmittel (Polysalz S) | 45,3 | 0,30 | 0,30 | 0,30 | 0,30 | 0,30 | 0,30 |
| NaOH | 25,0 | 0,05 | 0,05 | 0,05 | 0,05 | 0,05 | 0,05 |
| Styrol-Butadien-Binder Styronal® D 808 | 49,7 | 10,0 | 10,0 | 10,0 | 10,0 | 10,0 | 10,0 |
| Verdicker (Sterocoll®) | 40,5 | 0,30 | 0,30 | 0,30 | 0,30 | 0,30 | 0,30 |
| Markerdispersion 1 | 30,9 | 1,0 | 0,5 | 0,2 | 0,1 | 0,010 | 0,200 |
| Markerdispersion 2 | 32,5 | 1,0 | 0,5 | 0,2 | 0,1 | 0,010 | 0,400 |
| Markerdispersion 3 | 31,1 | 1,0 | 0,5 | 0,2 | 0,1 | 0,010 | 0,800 |

In der im Fach üblichen Notation gibt die erste Datenspalte der Tabelle unter (1) den Feststoffgehalt der verwendeten Einsatzstoffe an, jede der 6 folgenden Spalten (2) bis (7) gibt für jeweils ein Anwendungsbeispiel die relativen Konzentrationen, bezogen auf 100 Teile Pigment (in diesem Fall Hydrocarb 90 + Amazon 88) an.
Als Markerdispersion 1 wurde die nach Beispiel 3 hergestellte Dispersion verwendet.
Markerdispersion 2 wurde analog der Dispersion nach Beispiel 3 hergestellt, enthielt aber bei gleicher Farbstoffgesamtkonzentration nur den Farbstoff Roter Fluoreszenzfarbstoff (Lumogen® F - Rot 300).
Markerdispersion 3 wurde ebenfalls analog gemäß Beispiel 3 hergestellt, jedoch mit den Farbstoffen Lumogen® F - Rot 300 und Lumogen® F - Gelb 083 mit gleichen Anteilen. Die Dispersion bestand aus zweifarbigen Teilchen.
Die Streichfarben wurden anschließend auf ein Rohpapier der Fa. Scheufelen mit einem Rakel derart aufgetragen, dass ein Auftragsgewicht von 15 g/m$^2$ erhalten wurde. Anschließend wurden die so gestrichenen Papiere mit einem geeigneten Trockenaggregat getrocknet. Mit bloßem Auge ist die Markierung des Papiers durch die fluoreszierenden Markerteilchen nicht zu erkennen, eine spektroskopische Untersuchung mittels Laserrastermikroskopie erlaubte aber die eindeutige Identifizierung aller zur Markierung verwendeten Partikeltypen.

Markierung von Papierleimungsmittel

Erfindungsgemäß hergestellte Markerpartikel wurden in der Oberflächenveredlung von Papier eingesetzt. Dazu wurden die Markerdispersionen 1, 2 und 3 mit Basoplast® 400DS, einer Standard-Dispersion von Acrylat-Copolymeren, abgemischt, und diese Mischung dann in eine wässrige Stärkelösung eingerührt (Verhältnis synthetisches Produkt zu Stärke ca. 1:100). Die fertige Mischung hatte einen Feststoffgehalt von 8 bis 15% und wurde in dieser Form als Film auf Papier aufgerakelt. Das Auftragsgewicht betrug ca. 2 g/m$^2$ an Stärke, entsprechend 0,02 g/m$^2$ an Polymer. In spektroskopischen Untersuchungen mittels Laserrastermikroskopie konnten die eingesetzten Markerpartikel eindeutig identifiziert werden.

Markierung von Folienbeschichtungen

In 1 kg einer 45%igen Dispersion des siegelfähigen Acrylats Epotal® A 816 wurden 0,75 ml, bzw. 1,5 ml und 15 ml einer Markerdispersion nach Beispiel 3, bzw. analog hergestellter Dispersionen ein- und zweifarbiger Teilchen mit gleicher Gesamtkonzentration an Farbstoff der Typen Lumogen® F - Rot 300 bzw. Lumogen® F - Rot 300 und Lumogen® F - Orange 240 eingemischt und die Mischung mit einer Luftbürste auf eine BOPP Folie (MB 200 von ExxonMobil) appliziert, die vorher elektrisch vorbehandelt und mit einer PU Dispersion (Epotal® P 350) geprimert wurde. In spektroskopischen Untersuchungen mittels Laserrastermikroskopie konnten die eingesetzten Markerpartikel eindeutig identifiziert werden.

**Patentansprüche**

1. Wässrige Dispersionen von Polymeren, die einen Teilchendurchmesser von mindestens 1 $\mu$m haben und die einen Fluoreszenzfarbstoff enthalten, **dadurch gekennzeichnet, dass** sie erhältlich sind durch radikalische Suspensionspolymerisation von ethylenisch ungesättigten Monomeren in einer Öl-in-Wasser-Emulsion, deren disperse Phase mindestens einen Fluoreszenzfarbstoff in mindestens einem ethylenisch ungesättigten Monomer gelöst enthält und einen mittleren Teilchendurchmesser von mindestens 1 $\mu$m aufweist, in Gegenwart mindestens einer oberflächenaktiven Verbindung und zusätzlich mindestens 0,5 Gew.-%, bezogen auf die Monomeren, mindestens einer hydrophoben, nichtpolymerisierbaren, organischen Verbindung, wobei man als hydrophobe, nichtpolymerisierbare organische Verbindung aliphatische Kohlenwasserstoffe mit 10 bis 50 C-Atomen, Alkohole mit 10 bis 24 C-Atomen, Tetraalkylsilane, Olivenöl, Perfluormethyldekalin und/oder Di-n-butylester von $C_4$- bis $C_6$-Dicarbonsäuren einsetzt, eines hydrophoben Polymeren aus mindestens einem $C_2$-bis $C_6$-Olefin mit einer Molmasse $M_w$ bis zu 10 000, eines Siloxans mit einer Molmasse $M_w$ bis zu 5 000 und/oder Polystyrol mit einer Molmasse $M_w$ bis zu 10 000, wobei "hydrophob" eine Löslichkeit in Wasser von kleiner 0,01 g/l (bei 25 °C und 1013 mbar) bedeutet.

2. Wässrige Dispersionen nach Anspruch 1, **dadurch gekennzeichnet, dass** man als ethylenisch ungesättigte Monomere

   (a) hydrophobe Monomere aus der Gruppe $C_1$- bis $C_8$-Alkylester der Acrylsäure, $C_1$- bis $C_8$-Alkylester der Methacrylsäure, Vinylacetat, Vinylpropionat, Vinylbutyrat, Styrol, Chlorstyrol und/oder $\alpha$-Methylstyrol,
   (b) gegebenenfalls hydrophile Monomere aus der Gruppe ethylenisch ungesättigter $C_3$- bis $C_6$-Carbonsäuren, Vinylsulfonsäure, 2-Acrylamido-2-methylpropansulfonsäure, Sulfopropylacrylat, Sulfopropylmethacrylat, Styrolsulfonsäure, Salze der genannten Säuren, Acrylnitril, Methacrylnitril, $C_1$-bis $C_8$-Hydroxyalkylester von $C_1$- bis $C_6$-Carbonsäuren, Di-$C_1$-bis $C_3$-alkylamino-$C_2$- bis $C_4$-alkylacrylate, Di-$C_1$-bis $C_3$-alkylamino-$C_2$-bis $C_4$-alkylmethacrylate, Acrylamid, Methacrylamid, N-Vinylformamid und/oder N-Vinylpyrrolidon und
   (c) gegebenenfalls mindestens ein vernetzend wirkendes Monomer mit mindestens zwei Doppelbindungen im Molekül

   einsetzt.

3. Wässrige Dispersionen nach Anspruch 1 oder 2, **dadurch gekennzeichnet, dass** die bei der Polymerisation eingesetzten Monomergemische

   (a) 60 bis 100 Gew.-% mindestens eines hydrophoben Monomeren,
   (b) 0 bis 30 Gew.-% mindestens eines hydrophilen Monomeren und
   (c) 0 bis 40 Gew.-% mindestens eines vernetzend wirkenden Monomeren mit mindestens zwei Doppelbindungen

   enthalten.

4. Wässrige Dispersionen nach einem der Ansprüche 1 bis 3, **dadurch gekennzeichnet, dass** die bei der Polymerisation eingesetzten Monomergemische

   (a) 60 bis 99,9 Gew.-% mindestens eines hydrophoben Monomeren,
   (b) 0 bis 30 Gew.-% mindestens eines hydrophilen Monomeren und
   (c) 0,1 bis 25 Gew.-% mindestens eines vernetzend wirkenden Monomeren

   enthalten.

5. Wässrige Dispersionen nach einem der Ansprüche 1 bis 4, **dadurch gekennzeichnet, dass** man als hydrophobe Polymere Homopolymerisate mindestens eines $C_2$- bis $C_6$-Olefins oder Copolymerisate aus $C_2$- bis $C_6$-Olefinen mit einer Molmasse $M_w$ bis zu 10 000, Siloxane mit einer Molmasse $M_w$ bis zu 5 000 und/oder Polystyrol mit einer Molmasse $M_w$ bis zu 10 000 einsetzt.

6. Wässrige Dispersionen nach einem der Ansprüche 1 bis 4, **dadurch gekennzeichnet, dass** man als hydrophobe, nichtpolymerisierbare Verbindung Hexadekan und/oder Weißöl in einer Menge von 0,5 bis 50 Gew.-%, bezogen auf die Monomeren, einsetzt.

7.  Wässrige Dispersionen nach einem der Ansprüche 1 bis 6, **dadurch gekennzeichnet, dass** die dispergierten Polymerteilchen eine mittlere Teilchengröße von 1,1 bis 25 $\mu$m haben und mindestens einen Fluoreszenzfarbstoff in einer Menge von 0,001 bis 10 Gew.-% enthalten.

8.  Verfahren zur Herstellung von wässrigen Dispersionen von Polymeren, die einen mittleren Teilchendurchmesser von mindestens 1 $\mu$m haben und einen Fluoreszenzfarbstoff enthalten, durch radikalische Suspensionspolymerisation von ethylenisch ungesättigten Monomeren in einer Öl-in-Wasser-Emulsion, deren disperse Phase mindestens einen Fluoreszenzfarbstoff in mindestens einem ethylenisch ungesättigten Monomer gelöst enthält und einen mittleren Teilchendurchmesser von mindestens 1 $\mu$m aufweist, in Gegenwart mindestens einer oberflächenaktiven Verbindung, **dadurch gekennzeichnet, dass** man die Suspensionspolymerisation in Gegenwart von zusätzlich mindestens 0,5 Gew.-%, bezogen auf die Monomeren, mindestens einer hydrophoben, nichtpolymerisierbaren, organischen Verbindung, wobei man als hydrophobe, nichtpolymerisierbare organische Verbindung aliphatische Kohlenwasserstoffe mit 10 bis 50 C-Atomen, Alkohole mit 10 bis 24 C-Atomen, Tetraalkylsilane, Olivenöl, Perfluormethyldekalin und/oder Di-n-butylester von $C_4$- bis $C_6$-Dicarbonsäuren einsetzt, eines hydrophoben Polymeren aus mindestens einem $C_2$- bis $C_6$-Olefin mit einer Molmasse $M_w$ bis zu 10 000, eines Siloxans mit einer Molmasse $M_w$ bis zu 5 000 und/oder Polystyrol mit einer Molmasse $M_w$ bis zu 10 000 durchführt, wobei "hydrophob" eine Löslichkeit in Wasser von kleiner 0,01 g/l (bei 25 °C und 1013 mbar) bedeutet.

9.  Verfahren nach Anspruch 8, **dadurch gekennzeichnet, dass** man die Suspensionspolymerisation in Gegenwart von 0,5 bis 50 Gew.-%, bezogen auf die Monomeren, einer hydrophoben, nichtpolymerisierbaren, organischen Verbindung, eines hydrophoben Polymeren aus mindestens einem $C_2$- bis $C_6$-Olefin, eines Siloxans mit einer Molmasse $M_w$ bis zu 5 000 und/oder Polystyrol mit einer Molmasse $M_w$ bis zu 10 000 durchführt.

10. Verfahren nach einem der Ansprüche 8 oder 9, **dadurch gekennzeichnet, dass** man die Suspensionspolymerisation in Gegenwart von 1 bis 20 Gew.-%, bezogen auf die Monomeren, einer hydrophoben, nichtpolymerisierbaren, organischen Verbindung, eines hydrophoben Polymeren aus mindestens einem $C_2$- bis $C_6$-Olefin, eines Siloxans mit einer Molmasse $M_w$ bis zu 5 000 und/oder eines Polystyrols mit einer Molmasse $M_w$ bis zu 10 000 durchführt.

11. Verfahren nach einem der Ansprüche 8 bis 10, **dadurch gekennzeichnet, dass** man die Suspensionspolymerisation in Gegenwart von 2 bis 10 Gew.-% Hexadekan und/oder Weißöl durchführt.

12. Polymerteilchen, die einen mittleren Teilchendurchmesser von mindestens 1 $\mu$m haben und die mindestens einen Fluoreszenzfarbstoff enthalten, **dadurch gekennzeichnet, dass** sie erhältlich sind durch Trocknen der wässrigen Dispersionen von Polymeren, die erhältlich sind durch radikalische Suspensions-polymerisation von ethylenisch ungesättigten Monomeren in einer Öl-in-Wasser-Emulsion, deren disperse Phase mindestens einen Fluoreszenzfarbstoff in mindestens einem ethylenisch ungesättigten Monomer gelöst enthält und einen mittleren Teilchendurchmesser von mindestens 1 $\mu$m aufweist, in Gegenwart mindestens einer oberflächenaktiven Verbindung und zusätzlich mindestens 0,5 Gew.-%, bezogen auf die Monomeren, mindestens einer hydrophoben, nichtpolymerisierbaren, organischen Verbindung, wobei man als hydrophobe, nichtpolymerisierbare organische Verbindung aliphatische Kohlenwasserstoffe mit 10 bis 50 C-Atomen, Alkohole mit 10 bis 24 C-Atomen, Tetraalkylsilane, Olivenöl, Perfluormethyldekalin und/oder Di-n-butylester von $C_4$- bis $C_6$-Dicarbonsäuren einsetzt, eines hydrophoben Polymeren aus mindestens einem $C_2$ -bis $C_6$-Olefin mit einer Molmasse $M_w$ bis zu 10 000, eines Siloxans mit einer Molmasse $M_w$ bis zu 5 000 und/oder Polystyrol mit einer Molmasse $M_w$ bis zu 10 000, wobei "hydrophob" eine Löslichkeit in Wasser von kleiner 0,01 g/l (bei 25 °C und 1013 mbar) bedeutet.

13. Verwendung von wässrigen Dispersionen von Polymeren nach einem der Ansprüche 1 bis 7, oder von Polymerteilchen nach Anspruch 12 zum Markieren von Materialien.

14. Verwendung nach Anspruch 13, **dadurch gekennzeichnet, dass** die Polymerteilchen eine mittlere Teilchengröße von 1 $\mu$m bis 100 $\mu$m, insbesondere von 1,1 bis 25 $\mu$m aufweisen.

15. Verwendung nach Anspruch 13 oder 14 zum Markieren von Textilien, Papier, Papierprodukten, Lacken, Einsatzstoffen für die Bauindustrie, Klebstoffen, Kraftstoffen, Kunststofffolien, Papierstreichmassen, Papierleimungsmitteln, flüssigen Formulierungen für den Pflanzenschutz, pharmazeutischen und kosmetischen Formulierungen, Druckfarben zum Bedrucken von Verpackungen, Papier und Datenträgern.

**16.** Bindemittel enthaltend einen Binder und eine wässrige Dispersion gemäß einem der Ansprüche 1 bis 7.

**17.** Papierstreichmasse enthaltend ein Bindemittel gemäß Anspruch 16.

**18.** Papierleimungsmittel enthaltend eine wässrige Dispersion gemäß einem der Ansprüche 1 bis 7.

**Claims**

**1.** Aqueous dispersions of polymers which have a particle diameter of at least 1 $\mu$m and comprise a fluorescent dye, **characterized in that** said dispersion is obtainable by free radical suspension polymerization of ethylenically unsaturated monomers in an oil-in-water emulsion whose disperse phase comprises at least one fluorescent dye dissolved in at least one ethylenically unsaturated monomer and has an average particle diameter of at least 1 $\mu$m, in the presence of at least one surface-active compound and additionally at least 0.5% by weight, based on the monomers, of at least one hydrophobic, nonpolymerizable, organic compound, wherein aliphatic hydrocarbons having 10 to 50 carbon atoms, alcohols having 10 to 24 carbon atoms, tetraalkylsilanes, olive oil, perfluoromethyldecalin and/or di-n-butyl esters of $C_4$- to $C_6$-dicarboxylic acids are used as the hydrophobic, nonpolymerizable, organic compound, of a hydrophobic polymer of at least one $C_2$ to $C_6$-olefin having a molar mass $M_w$ of up to 10 000, of a siloxane having a molar mass $M_w$ of up to 5000 and/or polystyrene having a molar mass $M_w$ of up to 10 000, wherein "hydrophobic" means a solubility in water of less than 0.01 g/l (at 25°C and 1013 mbar).

**2.** Aqueous dispersions according to Claim 1, **characterized in that**

(a) hydrophobic monomers from the group consisting of $C_1$- to $C_8$-alkyl esters of acrylic acid, $C_1$- to $C_8$-alkyl esters of methacrylic acid, vinyl acetate, vinyl propionate, vinyl butyrate, styrene, chlorostyrene and/or $\alpha$-methylstyrene,
(b) optionally hydrophilic monomers from the group consisting of ethylenically unsaturated $C_3$- to $C_6$-carboxylic acids, vinylsulfonic acid, 2-acrylamido-2-methylpropanesulfonic acid, sulfopropyl acrylate, sulfopropyl methacrylate, styrenesulfonic acid, salts of said acids, acrylonitrile, methacrylonitrile, $C_1$- to $C_8$-hydroxyalkyl esters of $C_1$- to $C_6$-carboxylic acids, di-$C_1$- to $C_3$-alkylamino-$C_2$- to $C_4$-alkyl acrylates, di-$C_1$- to $C_3$-alkylamino-$C_2$- to $C_4$-alkyl methacrylates, acrylamide, methacrylamide, N-vinylformamide and/or N-vinylpyrrolidone and
(c) optionally at least one crosslinking monomer having at least two double bonds in the molecule are used as ethylenically unsaturated monomers.

**3.** Aqueous dispersions according to Claim 1 or 2, **characterized in that** the monomer mixtures used in the polymerization comprise

(a) from 60 to 100% by weight of at least one hydrophobic monomer,
(b) from 0 to 30% by weight of at least one hydrophilic monomer and
(c) from 0 to 40% by weight of at least one crosslinking monomer having at least two double bonds.

**4.** Aqueous dispersions according to any of Claims 1 to 3, **characterized in that** the monomer mixtures used in the polymerization comprise

(a) from 60 to 99.9% by weight of at least one hydrophobic monomer,
(b) from 0 to 30% by weight of at least one hydrophilic monomer and
(c) from 0.1 to 25% by weight of at least one crosslinking monomer.

**5.** Aqueous dispersions according to any of Claims 1 to 4, **characterized in that** homopolymers of at least one $C_2$- to $C_6$-olefin or copolymers of $C_2$- to $C_6$-olefins having a molar mass $M_w$ of up to 10 000, siloxanes having a molar mass $M_w$ of up to 5000 and/or polystyrene having a molar mass $M_w$ of up to 10 000 are used as hydrophobic polymers.

**6.** Aqueous dispersions according to any of Claims 1 to 4, **characterized in that** hexadecane and/or white oil in an amount of from 0.5 to 50% by weight, based on the monomers, is/are used as the hydrophobic, nonpolymerizable compound.

**7.** Aqueous dispersions according to any of Claims 1 to 6, **characterized in that** the dispersed polymer particles have an average particle size of from 1.1 to 25 $\mu$m and comprise at least one fluorescent dye in an amount of from 0.001 to 10% by weight.

8. Process for the preparation of aqueous dispersions of polymers which have an average particle diameter of at least 1 $\mu$m and comprise a fluorescent dye by free radical suspension polymerization of ethylenically unsaturated monomers in an oil-in-water emulsion whose disperse phase comprises at least one fluorescent dye dissolved in at least one ethylenically unsaturated monomer and has an average particle diameter of at least 1 $\mu$m, in the presence of at least one surface-active compound, **characterized in that** the suspension polymerization is carried out in the presence of additionally at least 0.5% by weight, based on the monomers, of at least one hydrophobic, nonpolymerizable organic compound, wherein aliphatic hydrocarbons having 10 to 50 carbon atoms, alcohols having 10 to 24 carbon atoms, tetraalkylsilanes, olive oil, perfluoromethyldecalin and/or di-n-butyl esters of $C_4$- to $C_6$-dicarboxylic acids are used as the hydrophobic, nonpolymerizable, organic compound, of a hydrophobic polymer of at least one $C_2$- to $C_6$-olefin having a molar mass $M_w$ of up to 10 000, of a siloxane having a molar mass $M_w$ of up to 5000 and/or polystyrene having a molar mass $M_w$ of up to 10 000, wherein "hydrophobic" means a solubility in water of less than 0.01 g/l (at 25°C and 1013 mbar).

9. Process according to Claim 8, **characterized in that** the suspension polymerization is carried out in the presence of from 0.5 to 50% by weight, based on the monomers, of a hydrophobic, nonpolymerizable, organic compound, of a hydrophobic polymer of at least one $C_2$- to $C_6$-olefin, of a siloxane having a molar mass $M_w$ of up to 5000 and/or polystyrene having a molar mass $M_w$ of up to 10 000.

10. Process according to either of Claims 8 and 9, **characterized in that** the suspension polymerization is carried out in the presence of from 1 to 20% by weight, based on the monomers, of a hydrophobic, nonpolymerizable, organic compound, of a hydrophobic polymer of at least one $C_2$- to $C_6$-olefin, of a siloxane having a molar mass $M_w$ of up to 5000 and/or a polystyrene having a molar mass $M_w$ of up to 10 000.

11. Process according to any of Claims 8 to 10, **characterized in that** the suspension polymerization is carried out in the presence of from 2 to 10% by weight of hexadecane and/or white oil.

12. Polymer particles which have an average particle diameter of at least 1 $\mu$m and comprise at least one fluorescent dye, **characterized in that** said polymer particles are obtainable by drying the aqueous dispersions of polymers which are obtainable by free radical suspension polymerization of ethylenically unsaturated monomers in an oil-in-water emulsion whose disperse phase comprises at least one fluorescent dye dissolved in at least one ethylenically unsaturated monomer and has an average particle diameter of at least 1 $\mu$m, in the presence of at least one surface-active compound and additionally at least 0.5% by weight, based on the monomers, of at least one hydrophobic, nonpolymerizable, organic compound, wherein aliphatic hydrocarbons having 10 to 50 carbon atoms, alcohols having 10 to 24 carbon atoms, tetraalkylsilanes, olive oil, perfluoromethyldecalin and/or di-n-butyl esters of $C_4$- to $C_6$-dicarboxylic acids are used as the hydrophobic, nonpolymerizable, organic compound, of a hydrophobic polymer of at least one $C_2$- to $C_6$-olefin having a molar mass $M_w$ of up to 10 000, of a siloxane having a molar mass $M_w$ of up to 5000 and/or polystyrene having a molar mass $M_w$ of up to 10 000, wherein "hydrophobic" means a solubility in water of less than 0.01 g/l (at 25°C and 1013 mbar).

13. Use of aqueous dispersions of polymers according to any of Claims 1 to 7, or of polymer particles according to Claim 12 for the marking of materials.

14. Use according to Claim 13, **characterized in that** the polymer particles have an average particle size of from 1 $\mu$m to 100 $\mu$m, in particular from 1.1 to 25 $\mu$m.

15. Use according to Claim 13 or 14 for the marking of textiles, paper, paper products, finishes, starting materials for the building industry, adhesives, fuels, plastics films, paper coating slips, paper sizes, liquid formulations for crop protection, pharmaceutical and cosmetic formulations, printing inks for the printing of packagings, paper and data media.

16. Binder composition comprising a binder and an aqueous dispersion according to any of Claims 1 to 7.

17. Paper coating slip comprising a binding composition according to Claim 16.

18. Paper size comprising an aqueous dispersion according to any of Claims 1 to 7.

**Revendications**

1. Dispersions aqueuses de polymères, qui ont un diamètre de particule d'au moins 1 $\mu$m et qui contiennent un colorant fluorescent, **caractérisées en ce qu'**elles peuvent être obtenues par polymérisation en suspension radicalaire de monomères éthyléniquement insaturés dans une émulsion huile dans eau, dont la phase dispersée contient au moins un colorant fluorescent dissous dans au moins un monomère éthyléniquement insaturé, et présente un diamètre de particule moyen d'au moins 1 $\mu$m, en présence d'au moins un composé tensioactif et en outre d'au moins 0,5 % en poids, par rapport aux monomères, d'au moins un composé organique hydrophobe, non polymérisable, des hydrocarbures aliphatiques de 10 à 50 atomes C, des alcools de 10 à 24 atomes C, des tétraalkylsilanes, de l'huile d'olive, de la perfluorométhyldécaline et/ou des esters di-n-butyliques d'acides dicarboxyliques en $C_4$ à $C_6$ étant utilisés en tant que composé organique hydrophobe non polymérisable, d'un polymère hydrophobe d'au moins une oléfine en $C_2$ à $C_6$ ayant une masse molaire $M_w$ de jusqu'à 10 000, d'un siloxane ayant une masse molaire $M_w$ de jusqu'à 5 000 et/ou d'un polystyrène ayant une masse molaire $M_w$ de jusqu'à 10 000, « hydrophobe » signifiant une solubilité dans l'eau inférieure à 0,01 g/l (à 25 °C et 1 013 mbar).

2. Dispersions aqueuses selon la revendication 1, **caractérisées en ce qu'**en tant que monomères éthyléniquement insaturés,

   (a) des monomères hydrophobes du groupe constitué par les esters alkyliques en $C_1$ à $C_8$ de l'acide acrylique, les esters alkyliques en $C_1$ à $C_8$ de l'acide méthacrylique, l'acétate de vinyle, le propionate de vinyle, le butyrate de vinyle, le styrène, le chlorostyrène et/ou l'$\alpha$-méthylstyrène,
   (b) éventuellement des monomères hydrophiles du groupe constitué par les acides carboxyliques en $C_3$ à $C_6$ éthyléniquement insaturés, l'acide vinylsulfonique, l'acide 2-acrylamido-2-méthylpropanesulfonique, l'acrylate de sulfopropyle, le méthacrylate de sulfopropyle, l'acide styrène-sulfonique, les sels des acides mentionnés, l'acrylonitrile, le méthacrylonitrile, les esters hydroxyalkyliques en $C_1$ à $C_8$ d'acides carboxyliques en $C_1$ à $C_6$, les acrylates de di-alkylamino en $C_1$ à $C_3$-alkyle en $C_2$ à $C_4$, les méthacrylates de di-alkylamino en $C_1$ à $C_3$-alkyle en $C_2$ à $C_4$, l'acrylamide, le méthacrylamide, le N-vinylformamide et/ou la N-vinylpyrrolidone, et
   (c) éventuellement au moins un monomère à effet réticulant contenant au moins deux doubles liaisons par molécule,

   sont utilisés.

3. Dispersions aqueuses selon la revendication 1 ou 2, **caractérisées en ce que** les mélanges de monomères utilisés lors de la polymérisation contiennent :

   (a) 60 à 100 % en poids d'au moins un monomère hydrophobe,
   (b) 0 à 30 % en poids d'au moins un monomère hydrophile et
   (c) 0 à 40 % en poids d'au moins un monomère à effet réticulant contenant au moins deux doubles liaisons.

4. Dispersions aqueuses selon l'une quelconque des revendications 1 à 3, **caractérisées en ce que** les mélanges de monomères utilisés lors de la polymérisation contiennent :

   (a) 60 à 99,9 % en poids d'au moins un monomère hydrophobe,
   (b) 0 à 30 % en poids d'au moins un monomère hydrophile et
   (c) 0,1 à 25 % en poids d'au moins un monomère à effet réticulant.

5. Dispersions aqueuses selon l'une quelconque des revendications 1 à 4, **caractérisées en ce que** des homopolymères d'au moins une oléfine en $C_2$ à $C_6$ ou des copolymères d'oléfines en $C_2$ à $C_6$ ayant une masse molaire $M_w$ de jusqu'à 10 000, des siloxanes ayant une masse molaire $M_w$ de jusqu'à 5 000 et/ou du polystyrène ayant une masse molaire $M_w$ de jusqu'à 10 000 sont utilisés en tant que polymères hydrophobes.

6. Dispersions aqueuses selon l'une quelconque des revendications 1 à 4, **caractérisées en ce que** de l'hexadécane et/ou de l'huile blanche sont utilisés en tant que composé hydrophobe non polymérisable en une quantité de 0,5 à 50 % en poids, par rapport aux monomères.

7. Dispersions aqueuses selon l'une quelconque des revendications 1 à 6, **caractérisées en ce que** les particules polymères dispersées ont une taille de particule moyenne de 1,1 à 25 $\mu$m et contiennent au moins un colorant fluorescent en une quantité de 0,001 à 10 % en poids.

**8.** Procédé de fabrication de dispersions aqueuses de polymères, qui ont un diamètre de particule moyen d'au moins 1 $\mu$m et contiennent un colorant fluorescent, par polymérisation en suspension radicalaire de monomères éthyléniquement insaturés dans une émulsion huile dans eau, dont la phase dispersée contient au moins un colorant fluorescent dissous dans au moins un monomère éthyléniquement insaturé et présente un diamètre de particule moyen d'au moins 1 $\mu$m, en présence d'au moins un composé tensioactif, **caractérisé en ce que** la polymérisation en suspension est réalisée en présence en outre d'au moins 0,5 % en poids, par rapport aux monomères, d'au moins un composé organique hydrophobe non polymérisable, des hydrocarbures aliphatiques de 10 à 50 atomes C, des alcools de 10 à 24 atomes C, des tétraalkylsilanes, de l'huile d'olive, de la perfluorométhyldécaline et/ou des esters di-n-butyliques d'acides dicarboxyliques en $C_4$ à $C_6$ étant utilisés en tant que composé organique hydrophobe non polymérisable, d'un polymère hydrophobe d'au moins une oléfine en $C_2$ à $C_6$ ayant une masse molaire $M_w$ de jusqu'à 10 000, d'un siloxane ayant une masse molaire $M_w$ de jusqu'à 5 000 et/ou d'un polystyrène ayant une masse molaire $M_w$ de jusqu'à 10 000, « hydrophobe » signifiant une solubilité dans l'eau inférieure à 0,01 g/l (à 25 °C et 1 013 mbar).

**9.** Procédé selon la revendication 8, **caractérisé en ce que** la polymérisation en suspension est réalisée en présence de 0,5 à 50 % en poids, par rapport aux monomères, d'un composé organique hydrophobe non polymérisable, d'un polymère hydrophobe d'au moins une oléfine en $C_2$ à $C_6$, d'un siloxane ayant une masse molaire $M_w$ de jusqu'à 5 000 et/ou d'un polystyrène ayant une masse molaire $M_w$ de jusqu'à 10 000.

**10.** Procédé selon l'une quelconque des revendications 8 ou 9, **caractérisé en ce que** la polymérisation en suspension est réalisée en présence de 1 à 20 % en poids, par rapport aux monomères, d'un composé organique hydrophobe non polymérisable, d'un polymère hydrophobe d'au moins une oléfine en $C_2$ à $C_6$, d'un siloxane ayant une masse molaire $M_w$ de jusqu'à 5 000 et/ou d'un polystyrène ayant une masse molaire $M_w$ de jusqu'à 10 000.

**11.** Procédé selon l'une quelconque des revendications 8 à 10, **caractérisé en ce que** la polymérisation en suspension est réalisée en présence de 2 à 10 % en poids d'hexadécane et/ou d'huile blanche.

**12.** Particules polymères, qui ont un diamètre de particule moyen d'au moins 1 $\mu$m et qui contiennent au moins un colorant fluorescent, **caractérisées en ce qu'**elles peuvent être obtenues par séchage des dispersions aqueuses de polymères qui peuvent être obtenues par polymérisation en suspension radicalaire de monomères éthyléniquement insaturés dans une émulsion huile dans l'eau, dont la phase dispersée contient au moins un colorant fluorescent dissous dans au moins un monomère éthyléniquement insaturé, et présente un diamètre de particule moyen d'au moins 1 $\mu$m, en présence d'au moins un composé tensioactif et en outre d'au moins 0,5 % en poids, par rapport aux monomères, d'au moins un composé organique hydrophobe, non polymérisable, des hydrocarbures aliphatiques de 10 à 50 atomes C, des alcools de 10 à 24 atomes C, des tétraalkylsilanes, de l'huile d'olive, de la perfluorométhyldécaline et/ou des esters di-n-butyliques d'acides dicarboxyliques en $C_4$ à $C_6$ étant utilisés en tant que composé organique hydrophobe non polymérisable, d'un polymère hydrophobe d'au moins une oléfine en $C_2$ à $C_6$ ayant une masse molaire $M_w$ de jusqu'à 10 000, d'un siloxane ayant une masse molaire $M_w$ de jusqu'à 5 000 et/ou d'un polystyrène ayant une masse molaire $M_w$ de jusqu'à 10 000, « hydrophobe » signifiant une solubilité dans l'eau inférieure à 0,01 g/l (à 25 °C et 1 013 mbar).

**13.** Utilisation de dispersions aqueuses de polymères selon l'une quelconque des revendications 1 à 7 ou de particules polymères selon la revendication 12 pour le marquage de matériaux.

**14.** Utilisation selon la revendication 13, **caractérisée en ce que** les particules polymères présentent une taille de particule moyenne de 1 $\mu$m à 100 $\mu$m, notamment de 1,1 à 25 $\mu$m.

**15.** Utilisation selon la revendication 13 ou 14 pour le marquage de textiles, de papier, de produits de papier, de vernis, de matières premières pour l'industrie du bâtiment, d'adhésifs, de carburants, de feuilles en matière plastique, de masses de couchage pour papier, d'agents d'encollage pour papier, de formulations liquides pour la protection des plantes, de formulations pharmaceutiques et cosmétiques, d'encres d'impression pour l'impression d'emballages, de papier de supports de données.

**16.** Agent liant contenant un liant et une dispersion aqueuse selon l'une quelconque des revendications 1 à 7.

**17.** Masse de couchage pour papier contenant un agent liant selon la revendication 16.

**18.** Agent d'encollage pour papier contenant une dispersion aqueuse selon l'une quelconque des revendications 1 à 7.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 9940123 A
- EP 1191041 A
- WO 2004037867 A
- WO 9952708 A
- DE 2004027416 A
- EP 0692517 B
- EP 0496149 A
- US 6541032 B
- EP 0105057 A
- US 5607864 B
- US 2005075453 A
- WO 2005105931 A
- EP 0590935 A
- US 4016133 B
- WO 9634903 A
- EP 0112592 B
- EP 0257412 B
- EP 0276770 B
- EP 1375530 B1

**In der Beschreibung aufgeführte Nicht-Patentliteratur**

- **B.J. BATTERSBY ; G.A. LAWRIE ; A.P.R. JOHNSTON ; M. TRAU.** *Chem. Commun.,* 2002, 1435-1441
- **RÖMPP.** Chemie Lexikon. vol. 5, 3569
- Methoden der organischen Chemie. **HOUBEN-WEYL.** Umwandlung von Cellulose. vol. 14/2, 862-915
- Ullmanns Encyclopedia for Industrial Chemistry. vol. 28, 533
- **P. H. H. ARAÚJO ; C. SAYER ; J. G. R. POCO ; R. GIUDICI.** *Polymer Engineering and Science,* 2002, vol. 42, 1442-1468
- **H. WIESE ; D. DISTLER.** Wässrige Polymerdispersionen. Wiley-VCH, 1999, 40
- **H. AUWETER ; D. HORN.** *J. Colloid Interf. Sci.,* 1985, vol. 105, 399
- **D. LILGE ; D. HORN.** *Colloid Polym. Sci.,* 1991, vol. 269, 704
- **H. WIESE ; D. HORN.** *J. Chem. Phys.,* 1991, vol. 94, 6429